# EUROPEAN PATENT APPLICATION

(11) **EP 4 221 438 A1**
(43) Date of publication of application: **02.08.2023**
(21) Application number: 20958336.8
(22) Date of filing: 23.10.2020
(51) Int. Cl.: H04W 76/10

(54) **COMMUNICATION METHOD AND APPARATUS**

(71) Applicant: Huawei Technologies Co., Ltd., Shenzhen, Guangdong 518129 (CN)
(72) Inventor: LI, Xiangyu, Shenzhen, Guangdong 518129 (CN)
(74) Representative: Pfenning, Meinig & Partner mbB
(86) International application number: PCT/CN2020/123342
(87) International publication number: WO 2022/082754

(57) **Abstract**

This application discloses a communication method and an apparatus. The method may be applied to a second terminal device, and includes: receiving a first message from a first relay device, where the first message includes an identifier of a first terminal device, and the identifier of the first terminal device is a layer 2 identifier of the first terminal device, an adaptation layer identifier of the first terminal device, or an identifier allocated by the first relay device to the first terminal device; communicating with the first terminal device based on the identifier of the first terminal device. Therefore, the second terminal device may identify, based on the identifier of the first terminal device, data sent to the relay device from a protocol layer below an RLC layer or receive data from the relay device, to determine that a source terminal device or a destination terminal device associated with the data is the first terminal device. In some relay scenarios, corresponding resources or bearer configurations may be requested for different destination terminal devices, to improve communication quality.

## Description

### TECHNICAL FIELD

This application relates to the field of communication technologies, and in particular, to a communication method and an apparatus.

### BACKGROUND

Currently, in addition to directly communicating with a terminal device, a terminal device may further communicate with the terminal device through a relay device. For example, the relay device (for example, a relay terminal device) may be used as a relay between a source terminal device (source UE) and a destination terminal device (destination UE), so that the source terminal device (for example, a terminal device 1) can communicate with the destination terminal device (for example, a terminal device 2) through the relay device. This technology is referred to as a user equipment to user equipment relay (UE to UE relay, U2U relay) technology.

Currently, in a possible manner, relay transmission and reception between the terminal devices may be implemented by using a layer 3 (layer 3, L3) relay technology. In this case, relay data may be forwarded through an internet protocol (internet protocol, IP) layer. To be specific, data of the source terminal device is parsed by the relay device to the IP layer, and forwarded by the relay device to the destination terminal device. In another manner, relay transmission and reception between the terminal devices may be implemented by using a layer 2 (layer 2, L2) relay technology. Relay data is forwarded by a layer below a packet data convergence protocol (packet data convergence protocol, PDCP) layer. To be specific, data of the source terminal device is parsed by the relay device to an adaptation layer or a radio link control (radio link control, RLC) layer, and forwarded by the relay device to the corresponding destination terminal device.

In a scenario in which a source terminal device (for example, the terminal device 1) communicates with a plurality of destination terminal devices (for example, the terminal device 2 and a terminal device 3) through a same relay device, there may be only one unicast connection between the terminal device 1 and the relay device, and the relay device establishes respective unicast connections to the terminal device 2 and the terminal device 3. Based on the manners in the existing technology, the terminal device 1 may only sense the relay device. As a result, a network in which the terminal device 1 is located can allocate only two sidelink data radio bearer (sidelink data radio bearer, SL DRB) configurations (used for transmission of unicast data between the terminal device 1 and the terminal device 2 and unicast data between the terminal device 1 and the terminal device 3) with same performance to the terminal device 1, but cannot allocate different configurations for different destination terminal devices. As a result, unicast data transmission quality corresponding to the different destination terminal devices may be poor.

### SUMMARY

This application provides a communication method and an apparatus, to improve unicast data transmission quality when a terminal device communicates with a relay device.

According to a first aspect, this application provides a communication method. The method may be performed by a second communication apparatus. For example, the second communication apparatus may be a terminal device. The second communication apparatus may be a communication device, or a communication apparatus, for example, a chip, that can support the communication device in implementing a function required in the method. The second communication apparatus may be a source terminal device, or may be a destination terminal device. The second communication apparatus may be a transmit end device, or may be a receive end device.

A second terminal device is used as an example. The method includes: The second terminal device receives a first message from a first relay device, where the first message includes an identifier of a first terminal device. The identifier of the first terminal device is a layer 2 identifier of the first terminal device, an adaptation layer identifier of the first terminal device, or an identifier allocated by the first relay device to the first terminal device. The second terminal device communicates with the first terminal device based on the identifier of the first terminal device.

According to the foregoing method, the second terminal device may obtain the identifier of the first terminal device, so that a protocol layer above an RLC layer of the second terminal device may further identify, based on the identifier of the first terminal device, data that is sent by a protocol layer below the RLC layer to the relay device or data received from the relay device, to determine that a source terminal device or a destination terminal device associated with the data is the first terminal device. Therefore, in some relay scenarios, for example, on a same unicast connection established between the source terminal device (the second terminal device) and the relay device, the unicast connection is associated with a plurality of unicast connections between the relay device and different destination terminal devices (for example, different first terminal devices). In this case, because the identifier of the first terminal device has been obtained, corresponding resources or bearer configurations may be allocated to the different destination terminal devices, so that communication quality may be improved when the second terminal device communicates with the first terminal device based on the identifier of the first terminal device.

In a possible implementation, the second terminal device sends a second message to the first relay device. The second message includes an identifier of the second terminal device. The identifier of the second terminal device is a layer 2 identifier of the second terminal device, an adaptation layer identifier of the second terminal device, or an identifier allocated by the first relay device to the second terminal device.

According to the foregoing method, the second terminal device may send the identifier of the second terminal device to the first relay device, so that the first relay device may obtain the identifier of the second terminal device, and the first relay device sends the identifier of the second terminal device for the first terminal device. In this way, the first terminal device may communicate with the second terminal device through the first relay device based on the identifier of the second terminal device, to improve quality of communication between the first terminal device and the second terminal device through the first relay device.

In a possible implementation, the first message or the second message is any one of the following: a unicast connection establishment request message, a unicast connection establishment accept message, a security mode activation command message, a security mode activation complete message, a PC5-RRC message, or a PC5-S message.

According to the foregoing method, the first message and the second message may be implemented in different manners, to improve flexibility of sending or receiving the first message or the second message in this application.

Scenario 1: The second terminal device is a transmit end device.

In a possible implementation, a first protocol layer obtains first data. The first data is data sent by the second terminal device to the first terminal device through the first relay device, and the first data is associated with the identifier of the second terminal device and the identifier of the first terminal device.

According to the foregoing method, the second terminal device may obtain the first data by using the first protocol layer. In addition, because the second terminal device has obtained the identifier of the first terminal device, the first protocol layer may associate the first data with the identifier of the second terminal device and the identifier of the first terminal device. Therefore, the protocol layer above the RLC layer of the second terminal device may determine, based on an association relationship of the first data, that a receive end device of the first data is the first terminal device.

In a possible implementation, the first protocol layer determines second data based on the first data. The second data is data sent by the second terminal device to the first terminal device through the first relay device, and the second data is associated with the identifier of the second terminal device and a second identifier of the first relay device.

According to the foregoing method, the second terminal device may determine the second data based on the association relationship of the first data by using the first protocol layer, so that the second data is data that may be sent to the relay device by using the protocol layer below the RLC layer.

In a possible implementation, the first protocol layer is a packet data convergence protocol PDCP layer or an adaptation layer.

According to the foregoing method, the first protocol layer may be implemented based on different protocol layers, to improve flexibility of sending the second data in this application.

Scenario 2: The second terminal device is a receive end device.

In a possible implementation, a second protocol layer obtains third data. The third data is data received by the second terminal device from the first terminal device through the first relay device, and the third data is associated with a first identifier of the first relay device and the identifier of the second terminal device.

According to the foregoing method, the second terminal device may obtain the third data by using the second protocol layer. In addition, because the second terminal device has obtained the identifier of the first terminal device, the second protocol layer may determine, based on that the third data is associated with the first identifier of the first relay device and the identifier of the second terminal device, that the third data is from the first terminal device.

In a possible implementation, the second protocol layer determines fourth data based on the third data. The fourth data is data received by the second terminal device from the first terminal device through the first relay device, and the fourth data is associated with the identifier of the first terminal device and the identifier of the second terminal device.

According to the foregoing method, the second terminal device may determine the fourth data based on the third data by using the second protocol layer. The fourth data is associated with the identifier of the second terminal device and the identifier of the first terminal device. Therefore, the protocol layer above the RLC layer of the second terminal device may determine, based on an association relationship of the fourth data, that a transmit end device of a data packet is the first terminal device.

In a possible implementation, the second protocol layer is a radio link control RLC layer or an adaptation layer.

According to the foregoing method, the second protocol layer may be implemented based on different protocol layers, to improve flexibility of receiving the third data in this application.

In a possible implementation, the second terminal device sends a first request message to an access network device. The first request message requests first radio bearer configuration information corresponding to the first terminal device, the first request message includes first QoS information and the identifier of the first terminal device, and the first QoS information is QoS information corresponding to the first terminal device.

According to the foregoing method, the second terminal device is the source terminal device, and the second terminal device may generate the first request message based on the first message, to obtain, by using the first request message, the first radio bearer configuration information that is allocated to the first terminal device. Because the first radio bearer configuration information is configured based on the first QoS information and the identifier of the first terminal device, the access network device may allocate corresponding resources or bearer configurations to different destination terminal devices (first terminal devices), so that the second terminal device communicates with the first terminal device based on the first radio bearer configuration information, to improve communication quality of communication between the second terminal device and the first terminal device through the first relay device.

In a possible implementation, the second terminal device receives first configuration information from the access network device. The first configuration information is the first radio bearer configuration information corresponding to the first terminal device, and a first radio bearer is used by the second terminal device to send data to the first terminal device.

According to the foregoing method, the second terminal device may receive the first radio bearer configuration information that is configured by the access network device for the first terminal device. Therefore, the second terminal device may communicate with the first terminal device based on the first radio bearer configuration information, to improve communication quality of communication between the second terminal device and the first terminal device through the first relay device.

According to a second aspect, this application provides a communication method. The method may be performed by a second communication apparatus. For example, the second communication apparatus may be a terminal device. The second communication apparatus may be a communication device, or a communication apparatus, for example, a chip, that can support the communication device in implementing a function required in the method. The second communication apparatus may be a source terminal device, or may be a destination terminal device. The second communication apparatus may be a transmit end device, or may be a receive end device. The second terminal device is used as an example. The method includes:

The second terminal device determines a second request message. The second terminal device sends the second request message to an access network device. The second request message includes first QoS information, a second identifier of a first relay device, and first information. The first QoS information is QoS information corresponding to a first terminal device, the second identifier of the first relay device is used by the second terminal device to communicate with the first relay device, there is a correspondence between the first information and the first QoS information, and there is a correspondence between the first information and the second identifier.

According to the foregoing method, the second terminal device may send the first QoS information, the second identifier of the first relay device, and the first information to the access network device. The first QoS information is the QoS information corresponding to the first terminal device, and there is the correspondence between the first information and the first QoS information, so that the access network device may determine that the first QoS information is used to allocate a radio bearer to the first terminal device. There is the correspondence between the first information and the second identifier, so that the access network device may determine that the radio bearer is used when the second terminal device communicates with the first terminal device through the first relay device. Therefore, the second terminal device may also request a radio bearer configuration of the first terminal device from the access network device when the second terminal device does not determine the identifier of the first terminal device, to improve communication quality of communication between the second terminal device and the first terminal device through the first relay device.

In a possible implementation, the first terminal device includes N third terminal devices, the first QoS information includes M pieces of second QoS information, and the first information includes N pieces of second information, where N is a positive integer, and M is a positive integer greater than or equal to N. The second QoS information is QoS information corresponding to the third terminal device, and there is a correspondence between the second information and the second QoS information.

According to the foregoing method, when the first terminal device includes the N third terminal devices, the second terminal device may send, to the access network device, the M pieces of second QoS information corresponding to the N third terminal devices, so that the access network device may configure, based on the M pieces of second QoS information and the N pieces of second information, radio bearers for the N third terminal devices, to improve communication quality of communication between the second terminal device and the N third terminal devices through the first relay device.

In a possible implementation, the method further includes: receiving a second response message from the access network device, where the second response message includes radio bearer configuration information corresponding to the first terminal device; and communicating with the first terminal device through the first relay device on a radio bearer corresponding to the first terminal device.

According to the foregoing method, the second terminal device may receive the first radio bearer configuration information that is configured by the access network device for the first terminal device. Therefore, the second terminal device may communicate with the first terminal device based on the first radio bearer configuration information, to improve communication quality of communication between the second terminal device and the first terminal device through the first relay device.

In a possible implementation, the radio bearer configuration information corresponding to the first terminal device includes X pieces of third radio bearer configuration information, where X is a positive integer less than or equal to N; and the method further includes: communicating with a corresponding third terminal device through the first relay device on a third radio bearer.

According to the foregoing method, the second terminal device may receive the X pieces of third radio bearer configuration information that are configured by the access network device for the N third terminal devices. Therefore, the second terminal device may communicate with the N third terminal devices based on the X pieces of third radio bearer configuration information, to improve communication quality of communication between the second terminal device and the N third terminal devices through the first relay device.

In a possible implementation, the first QoS information includes a first QoS identifier, and the first QoS identifier is not corresponding to the first information. The second response message further includes the first QoS identifier and the first information.

According to the foregoing method, the first QoS identifier in the first QoS information is not corresponding to the first information. Therefore, the first QoS identifier and the first information are corresponding to the QoS information of the first terminal device, to improve flexibility of identifying the QoS information of the first terminal device.

In a possible implementation, the first QoS information includes a first QoS identifier, and the first QoS identifier is corresponding to the first information. The second response message further includes the first QoS identifier

According to the foregoing method, the first QoS identifier is corresponding to the first information, so that the first QoS identifier is corresponding to the QoS information of the first terminal device, to increase complexity of identifying the QoS information of the first terminal device.

In a possible implementation, the first information is one of the following: a local identifier of an adaptation layer of the first terminal device, a unique identifier of the adaptation layer of the first terminal device, an identifier of a PC5-S layer of the first terminal device, or a layer 2 identifier of the first terminal device.

According to the foregoing method, the first information may be implemented in plurality of manners, so that flexibility of identifying the QoS information of the first terminal device may be improved.

According to a third aspect, this application provides a communication method. The method may be performed by a first communication apparatus. For example, the first communication apparatus may be a relay device. The relay device may be a terminal device or a network device. The first communication apparatus may be a communication device, or a communication apparatus, for example, a chip, that can support the communication device in implementing a function required in the method. An example in which the first communication apparatus is a first relay device is used below for description. The method includes: sending a first message to a second terminal device, where the first message includes an identifier of a first terminal device, the identifier of the first terminal device is a layer 2 identifier of the first terminal device, an adaptation layer identifier of the first terminal device, or an identifier allocated by the first relay device to the first terminal device, and the identifier of the first terminal device is used by the second terminal device to communicate with the first terminal device based on the identifier of the first terminal device; and sending a second message to the first terminal device, where the second message includes an identifier of the second terminal device, the identifier of the second terminal device is a layer 2 identifier of the second terminal device, an adaptation layer identifier of the second terminal device, or an identifier allocated by the first relay device to the second terminal device, and the identifier of the second terminal device is used by the first terminal device to communicate with the second terminal device based on the identifier of the second terminal device.

According to the foregoing method, the first relay device may send the identifier of the first terminal device to the second terminal device, and send the identifier of the second terminal device to the first terminal device. Therefore, when the second terminal device communicates with the first terminal device through the first relay device, a protocol layer above an RLC layer of the second terminal device may identify, based on the identifier of the first terminal device, a data packet sent by a protocol layer below the RLC layer to the relay device or data received from the relay device, to determine that a source terminal device or a destination terminal device associated with the data is the first terminal device. Therefore, in some relay scenarios, for example, a same unicast connection established between the source terminal device (the second terminal device) and the relay device is associated with a plurality of unicast connections between the relay device and different destination terminal devices (for example, different first terminal devices). In this case, because the identifier of the first terminal device has been obtained, corresponding resources or bearer configurations may be allocated to the different destination terminal devices, so that communication quality may be improved when the second terminal device communicates with the first terminal device based on the identifier of the first terminal device.

In a possible implementation, the method further includes: sending a third message to a second relay device, where the third message includes the identifier of the first terminal device, and the second relay device provides a relay service for the second terminal device and the first terminal device.

The foregoing method may be applied to a multi-hop scenario. To be specific, the relay service is provided for the second terminal device and the first terminal device through the first relay device and the second relay device. In this case, the first relay device may send the third message to the second relay device, so that the second relay device may send the identifier of the first terminal device to the second terminal device.

In a possible implementation, the method further includes: sending a fourth message to a second relay device, where the fourth message includes the identifier of the second terminal device, and the second relay device provides a relay service for the second terminal device and the first terminal device.

The foregoing method may be applied to a multi-hop scenario. To be specific, the relay service is provided for the second terminal device and the first terminal device through the first relay device and the second relay device. In this case, the first relay device may send the fourth message to the second relay device, so that the second relay device may send the identifier of the second terminal device to the first terminal device.

In a possible implementation, the first message or the second message is any one of the following: a unicast connection establishment request message, a unicast connection establishment accept message, a security mode activation command message, a security mode activation complete message, a PC5-RRC message, or a PC5-S message.

According to the foregoing method, flexibility of sending the first message or the second message by the first relay device in this application can be improved.

According to a fourth aspect, this application provides a communication method. The method may be performed by a second communication apparatus. For example, the second communication apparatus may be a terminal device. The second communication apparatus may be a communication device, or a communication apparatus, for example, a chip, that can support the communication device in implementing a function required in the method. The second communication apparatus may be a source terminal device, or may be a destination terminal device. The second communication apparatus may be a transmit end device, or may be a receive end device. A second terminal device is used as an example. The method includes:

The second terminal device sends a third request message to a first relay device. The third request message is a PC5-RRC message, and the third request message requests the first relay device to establish a unicast connection to a fourth terminal device. A first terminal device establishes a unicast connection to the second terminal device through the first relay device. The second terminal device receives a third response message sent by the first relay device. The third response message is a PC5-RRC message, and the third response message indicates that the first relay device completes establishment of the unicast connection to the fourth terminal device.

According to the foregoing method, the second terminal device may receive the third request message from the first terminal device on a first radio bearer, to request establishment of the unicast connection between the first relay device and the fourth terminal device on the first radio bearer, so as to reuse the first radio bearer, and reduce resource overheads.

In a possible implementation, the second terminal device receives a fourth request message from a second relay device. The fourth request message requests the second terminal device to establish a unicast connection to a fifth terminal device through the second relay device. The fifth terminal device establishes a unicast connection to the first terminal device through the second relay device. The fourth request message is a PC5-RRC message. The second terminal device sends a fourth response message through the second relay device. The fourth response message indicates that the second terminal device establishes the unicast connection to the fifth terminal device through the second relay device. The fourth response message is a PC5-RRC message.

The foregoing method may be applied to a multi-hop scenario. A relay service is provided for the first terminal device and the second terminal device through the first relay device and the second relay device. In this case, the second terminal device may receive the fourth request message from the second relay device on the first radio bearer, to request establishment of the unicast connection between the first relay device and the fifth terminal device on the first radio bearer, so as to reuse the first radio bearer, and reduce resource overheads.

In a possible implementation, the third request message or the fourth request message includes at least one of the following: an application identifier of the second terminal device, an application layer identifier of the fifth terminal device, a service identifier, security capability information, and an identifier of the fifth terminal device.

According to the foregoing method, the third request message or the fourth request message may include a plurality of types of information, so that application scenarios of the third request message or the fourth request message may be enriched.

In a possible implementation, the identifier of the fifth terminal device is a layer 2 identifier of the fifth terminal device, an adaptation layer identifier of the fifth terminal device, or an identifier allocated by the first relay device to the fifth terminal device.

According to the foregoing method, the identifier of the fifth terminal device may be determined in a plurality of manners, to improve flexibility and applicability of the identifier of the fifth terminal device.

In a possible implementation, the third request message is generated by a PC5-RRC layer under an indication of a PC5-S layer, and the third response message is generated by the PC5-RRC layer under an indication of the PC5-S layer. Alternatively, the fourth request message is generated by the PC5-RRC layer under an indication of the PC5-S layer, and the third response message is generated by the PC5-RRC layer under an indication of the PC5-S layer.

According to the foregoing method, the third request message may be sent in a plurality of manners, to improve flexibility of sending the third request message.

According to a fifth aspect, this application provides a communication method. The method may be performed by a second communication apparatus. For example, the second communication apparatus may be a terminal device. The second communication apparatus may be a communication device, or a communication apparatus, for example, a chip, that can support the communication device in implementing a function required in the method. The second communication apparatus may be a source terminal device, or may be a destination terminal device. The second communication apparatus may be a transmit end device, or may be a receive end device. A second terminal device is used as an example. The method includes:
receiving a third request message from a first terminal device on a first radio bearer, where the third request message requests a first relay device to establish a unicast connection to a fourth terminal device, the first radio bearer is a radio bearer between the first terminal device and the second terminal device, and the third request message is a PC5-RRC message; and sending a third response message to the first terminal device on the first radio bearer, where the third response message indicates that the first relay device completes establishment of the unicast connection to the fourth terminal device, and the third response message is a PC5-RRC message.

According to the foregoing method, the second terminal device may receive the third request message from the first terminal device on the first radio bearer, to request establishment of the unicast connection between the first relay device and the fourth terminal device on the first radio bearer, so as to reuse the first radio bearer, and reduce resource overheads.

In a possible implementation, the third request message is sent by a PCS-RRC layer under an indication of a PC5-S layer, and the third response message is sent by the PC5-RRC layer under an indication of the PC5-S layer.

According to the foregoing method, the third request message may be sent in a plurality of manners, to improve flexibility of sending the third request message.

In a possible implementation, the third request message includes at least one of the following: an application identifier of the first terminal device, an application layer identifier of the fourth terminal device, a service identifier, security capability information, and an identifier of the fourth terminal device.

According to the foregoing method, the third request message may include a plurality of types of information, so that application scenarios of the third request message may be enriched.

In a possible implementation, the identifier of the fourth terminal device is a layer 2 identifier of the fourth terminal device, an adaptation layer identifier of the fourth terminal device, or an identifier allocated by the first relay device to the fourth terminal device.

According to the foregoing method, the identifier of the fourth terminal device may be determined in a plurality of manners, to improve flexibility and applicability of the identifier of the fourth terminal device.

According to a sixth aspect, this application provides a communication apparatus. For example, the communication apparatus is the foregoing second communication apparatus. The second communication apparatus is configured to perform the method in the implementations of the first aspect, the second aspect, the fourth aspect, or the fifth aspect. Specifically, the first communication apparatus may include modules configured to perform the method in the implementations of the first aspect, the second aspect, the fourth aspect, or the fifth aspect, for example, include a processing module, a sending module, and a receiving module.

For example, the sending module and the receiving module may be different functional modules, or may be a same functional module, but can implement different functions (where the sending module is configured to implement a signal sending function, and the receiving module is configured to implement a signal receiving function). For example, the first communication apparatus is a communication device, or is a chip or another component disposed in the communication device. For example, the first communication apparatus may be a terminal device, or may be a chip or another component disposed in the terminal device. For example, the sending module may alternatively be implemented by using a transceiver, and the processing module may alternatively be implemented by using a processor. Alternatively, the sending module may be implemented by using a transmitter, and the receiving module may be implemented by using a receiver. The transmitter and the receiver may be different functional modules, or may be a same functional module, but can implement different functions (where the transmitter is configured to implement the signal sending function, and the receiver is configured to implement the signal receiving function). If the first communication apparatus is the communication device, the transceiver is implemented, for example, by using an antenna, a feeder, and a codec in the communication device. Alternatively, if the first communication apparatus is the chip disposed in the communication device, the transceiver (or the transmitter and the receiver) is, for example, a communication interface (or an interface circuit) in the chip, and the communication interface is connected to a radio frequency transceiver component in the communication device, to implement information receiving and sending by using the radio frequency transceiver component.

According to a seventh aspect, this application provides a communication apparatus. For example, the communication apparatus is the foregoing first communication apparatus. The second communication apparatus is configured to perform the method in the implementations of the third aspect. Specifically, the first communication apparatus may include modules configured to perform the method in the implementations of the third aspect, for example, include a processing module and a sending module.

For example, the first communication apparatus may further include a receiving module. The sending module and the receiving module may be different functional modules, or may be a same functional module, but can implement different functions (where the sending module is configured to implement a signal sending function, and the receiving module is configured to implement a signal receiving function). For example, the first communication apparatus is a relay device, or is a chip or another component disposed in the relay device. For example, the first communication apparatus may be a network device or a terminal device, or may be a chip or another component disposed in the network device or the terminal device. For example, the sending module may alternatively be implemented by using a transceiver, and the processing module may alternatively be implemented by using a processor. Alternatively, the sending module may be implemented by using a transmitter, and the receiving module may be implemented by using a receiver. The transmitter and the receiver may be different functional modules, or may be a same functional module, but can implement different functions (where the transmitter is configured to implement the signal sending function, and the receiver is configured to implement the signal receiving function). If the first communication apparatus is the relay device, the transceiver is implemented, for example, by using an antenna, a feeder, and a codec in the relay device. Alternatively, if the first communication apparatus is the chip disposed in the communication device, the transceiver (or the transmitter and the receiver) is, for example, a communication interface (or an interface circuit) in the chip, and the communication interface is connected to a radio frequency transceiver component in the communication device, to implement information receiving and sending by using the radio frequency transceiver component.

According to an eighth aspect, a communication apparatus is provided. The communication apparatus is, for example, the foregoing second communication apparatus. The communication apparatus includes a processor and a communication interface (or an interface circuit). The communication interface may be configured to communicate with another apparatus or device. Optionally, the communication apparatus may further include a memory, configured to store computer instructions. The processor and the memory are coupled to each other, and are configured to implement the method described in the implementations of the first aspect, the second aspect, the fourth aspect, or the fifth aspect. Alternatively, the second communication apparatus may not include a memory, and the memory may be located outside the second communication apparatus. The processor, the memory, and the communication interface are coupled to each other, and are configured to implement the method described in the implementations of the first aspect, the second aspect, the fourth aspect, or the fifth aspect. For example, when the processor executes the computer instructions stored in the memory, the second communication apparatus is enabled to perform the method in the implementations of the first aspect, the second aspect, the fourth aspect, or the fifth aspect. For example, the second communication apparatus is a communication device, or is a chip or another component disposed in the communication device. For example, the second communication apparatus may be a terminal device, or may be a chip or another component disposed in the terminal device.

If the second communication apparatus is the communication device, the communication interface is implemented by using, for example, a transceiver (or a transmitter and a receiver) in the communication device. For example, the transceiver is implemented by using an antenna, a feeder, a codec, or the like in the communication device. Alternatively, if the second communication apparatus is the chip disposed in the communication device, the communication interface is, for example, an input/output interface such as an input/output pin of the chip. The communication interface is connected to a radio frequency transceiver component in the communication device, to implement information receiving and sending by using the radio frequency transceiver component.

According to a ninth aspect, a communication apparatus is provided. The communication apparatus is, for example, the foregoing first communication apparatus. The communication apparatus includes a processor and a communication interface (or an interface circuit). The communication interface may be configured to communicate with another apparatus or device. Optionally, the communication apparatus may further include a memory, configured to store computer instructions. The processor and the memory are coupled to each other, and are configured to implement the method described in the implementations of the third aspect. Alternatively, the first communication apparatus may not include a memory, and the memory may be located outside the first communication apparatus. The processor, the memory, and the communication interface are coupled to each other, and are configured to implement the method described in the implementations of the third aspect. For example, when the processor executes the computer instructions stored in the memory, the first communication apparatus is enabled to perform the method in the implementations of the third aspect. For example, the communication device is a relay device. For example, the first communication apparatus may be a relay device, or may be a chip or another component disposed in the relay device. For example, the first communication apparatus is a communication device, or is a chip or another component disposed in the communication device. If the first communication apparatus is the communication device, the communication interface is implemented by using, for example, a transceiver (or a transmitter and a receiver) in the communication device. For example, the transceiver is implemented by using an antenna, a feeder, a codec, or the like in the communication device. Alternatively, if the first communication apparatus is the chip disposed in the communication device, the communication interface is, for example, an input/output interface such as an input/output pin of the chip. The communication interface is connected to a radio frequency transceiver component in the communication device, to implement information receiving and sending by using the radio frequency transceiver component.

According to a tenth aspect, a chip is provided. The chip includes a processor and a communication interface. The processor is coupled to the communication interface, and is configured to implement the method provided in the implementations of the first aspect, the second aspect, the fourth aspect, or the fifth aspect.

Optionally, the chip may further include a memory. For example, the processor may read and execute a software program stored in the memory, to implement the method provided in the implementations of the first aspect, the second aspect, the fourth aspect, or the fifth aspect. Alternatively, the memory may not be included in the chip, but is located outside the chip. That is, the processor may read and execute a software program stored in the external memory, to implement the method provided in the implementations of the first aspect, the second aspect, the fourth aspect, or the fifth aspect.

According to an eleventh aspect, a chip is provided. The chip includes a processor and a communication interface. The processor is coupled to the communication interface, and is configured to implement the method provided in the implementations of the third aspect.

Optionally, the chip may further include a memory. For example, the processor may read and execute a software program stored in the memory, to implement the method provided in the implementations of the third aspect. Alternatively, the memory may not be included in the chip, but is located outside the chip. That is, the processor may read and execute a software program stored in the external memory, to implement the method provided in the implementations of the third aspect or the fourth aspect.

According to a twelfth aspect, a communication system is provided. The communication system includes the communication apparatus in the sixth aspect or the communication apparatus in the eighth aspect, and includes the communication apparatus in the seventh aspect or the communication apparatus in the ninth aspect.

According to a thirteenth aspect, a computer-readable storage medium is provided. The computer-readable storage medium is configured to store a computer program. When the computer program is run on a computer, the computer is enabled to perform the method in the implementations of the first aspect, the second aspect, the fourth aspect, or the fifth aspect.

According to a fourteenth aspect, a computer-readable storage medium is provided. The computer-readable storage medium is configured to store a computer program. When the computer program is run on a computer, the computer is enabled to perform the method in the implementations of the third aspect.

According to a fifteenth aspect, a computer program product including instructions is provided. The computer program product is configured to store a computer program. When the computer program is run on a computer, the computer is enabled to perform the method in the implementations of the first aspect, the second aspect, the fourth aspect, or the fifth aspect.

According to a sixteenth aspect, a computer program product including instructions is provided. The computer program product is configured to store a computer program. When the computer program is run on a computer, the computer is enabled to perform the method in the implementations of the third aspect.

### BRIEF DESCRIPTION OF DRAWINGS

FIG. 1a is a schematic diagram of an application scenario of a communication method according to an embodiment of this application;
FIG. 1b to FIG. 1d each are a schematic architectural diagram of a communication system according to an embodiment of this application;
FIG. 2 is a schematic flowchart of a unicast connection establishment method according to an embodiment of this application;
FIG. 3 is a schematic diagram of a protocol stack according to an embodiment of this application;
FIG. 4 is a schematic flowchart of a unicast connection establishment method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a schematic diagram of a protocol stack according to an embodiment of this application;
FIG. 13 is a schematic flowchart of a communication method according to an embodiment of this application;
FIG. 14 is a schematic diagram of a structure of a second communication apparatus according to an embodiment of this application; and
FIG. 15 is a schematic diagram of a structure of a communication apparatus according to an embodiment of this application.

### DESCRIPTION OF EMBODIMENTS

The following describes some terms in embodiments of this application, to facilitate understanding of a person skilled in the art.
(1) Vehicle-to-everything (vehicle-to-everything, V2X) means that vehicle information is provided by using a sensor mounted on a vehicle, a vehicle-mounted terminal, or the like, and vehicle-to-vehicle communication, vehicle-to-pedestrian communication, vehicle-to-roadside-infrastructure communication, and vehicle-to-network communication are implemented by using various communication technologies.

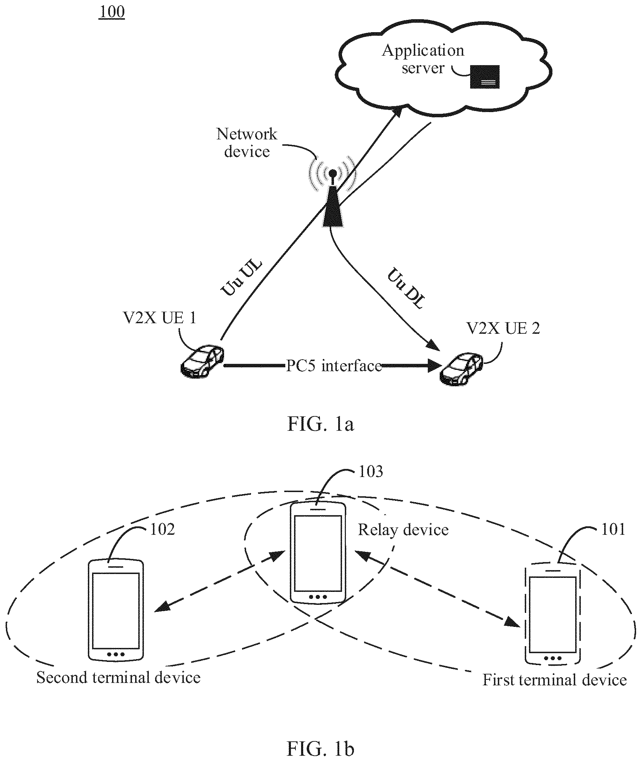

Solutions provided in embodiments of this application are described by using examples in which the solutions are applied to V2X scenarios. FIG. 1a is a schematic diagram of a V2X communication architecture 100. As shown in FIG. 1a, the V2X communication architecture 100 includes V2X devices (for example, V2X UE 1 and V2X UE 2 shown in FIG. 1a) and a network device. The V2X communication architecture 100 may further include a V2X application server (application server). The V2X communication architecture includes two types of communication interfaces: a PCS interface and a Uu interface. The PCS interface is a direct communication interface between V2X UEs, and a direct communication link between the V2X UEs is also defined as a sidelink (sidelink, SL). Uu interface communication is a communication mode in which a sender V2X UE (for example, the V2X UE 1) sends V2X data to a network device through a Uu interface, the network device sends the V2X data to the V2X application server for processing, then the V2X application server delivers the V2X data to a network device, and the network device sends the V2X data to a receiver V2X UE (for example, the V2X UE 2). In the Uu interface communication mode, a network device that forwards uplink data of the sender V2X UE to the application server and a network device that forwards downlink data delivered by the application server to the receiver V2X UE may be a same network device, or may be different network devices. This may be specifically determined by the application server. It should be understood that, sending by the sender V2X UE to the network device is referred to as uplink (uplink, UL) transmission, and is represented by using Uu UL in FIG. 1a, and sending by the network device to the receiver V2X UE is referred to as downlink (downlink, DL) transmission, and is represented by using Uu DL in FIG. 1a.

Technical solutions provided in this application may be applied to a device-to-device (device-to-device, D2D) scenario, and optionally, may be applied to a vehicle-to-everything (vehicle-to-everything, V2X) scenario. For example, D2D may be D2D in a long term evolution (long term evolution, LTE) communication system, may be D2D in a new radio (new radio, NR) communication system, or may be D2D in another communication system that may appear as technologies develop. R12 D2D is mainly oriented to public safety (Public Safety), and includes two parts: D2D communication and D2D discovery. The R12 D2D communication is oriented to public security and supports only multicast communication (one-to-Many D2D communication). The R12 D2D discovery supports simple commercial broadcasts (for example, advertisement broadcasts). Similarly, V2X may be LTE V2X or NR V2X, or may be V2X in another communication system that may appear as technologies develop.

(2) A terminal device in embodiments of this application may include a device that provides a voice and/or data connectivity for a user. Specifically, the terminal device includes a device that provides a voice for the user, includes a device that provides data connectivity for the user, or includes a device that provides a voice and data connectivity for the user. The terminal device may also be referred to as user equipment (user equipment, UE), a mobile station (mobile station, MS), a mobile terminal (mobile terminal, MT), or the like, and is a device that provides a voice or data connectivity for the user, or may be an internet of things device. For example, the terminal device includes a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric car, an airplane, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or a power meter), an intelligent robot, workshop equipment, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, an intelligent robot, a hot air balloon, a drone, or an airplane). The terminal may alternatively be another device that has a terminal function. For example, the terminal may alternatively be a device that functions as a terminal in D2D communication or vehicle-to-everything communication. As an example instead of a limitation, in embodiments of this application, the terminal device may alternatively be a wearable device. If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be mounted in the terminal device. In embodiments of this application, the chip system may include a chip, or may include the chip and another discrete component. In the technical solutions provided in embodiments of this application, the technical solutions provided in embodiments of this application are described by using an example in which the apparatus configured to implement the function of the terminal is the terminal device. For example, in embodiments of this application, the terminal device may alternatively be a chip in the terminal device, or a communication apparatus, a unit, a module, or the like having a D2D or V2X communication function, for example, a vehicle-mounted communication apparatus, a vehicle-mounted communication module, or a vehicle-mounted communication chip.

(3) A network device includes, for example, an access network (access network, AN) device such as a base station (for example, an access point), and may be a device that is in an access network and that communicates with a wireless terminal device over an air interface through one or more cells. Alternatively, for example, a network device in a V2X technology is a road side unit (road side unit, RSU). The base station may be configured to perform mutual conversion between a received over-the-air frame and an IP packet, and serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in an LTE system or a long term evolution-advanced (long term evolution-advanced, LTE-A) system, may include a next generation NodeB (next generation NodeB, gNB) in a 5G new radio (new radio, NR) system (also briefly referred to as an NR system), or may include a central unit (central unit, CU) and a distributed unit (distributed unit, DU) in a cloud radio access network (cloud radio access network, Cloud RAN) system. This is not limited in embodiments of this application.

The network device may further include a core network device. However, because embodiments of this application mainly relate to an access network device, a network device mentioned below may refer to an access network device unless otherwise specified.

In embodiments of this application, an apparatus configured to implement a function of the network device may be a network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is the network device.

(4) Access stratum (access layer, AS) layer:
The AS layer of the terminal device may include one or more of a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, and a media access control (media access control, MAC) layer. Optionally, the access stratum may further include a physical (physical, PHY) layer.

An upper layer of the AS layer may be a layer above the AS layer of the terminal device, for example, a V2X layer, an application layer, or a layer between the V2X layer and the application layer.

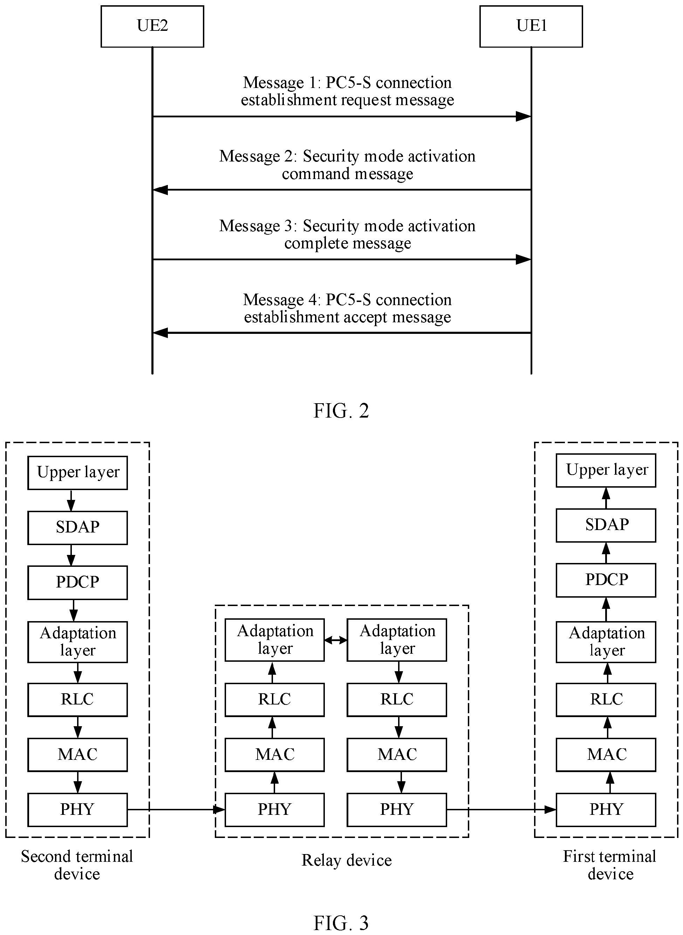

(5) A process of establishing a unicast connection for SL communication:
In NR V2X R16, the SL communication supports three communication modes: unicast, multicast, and broadcast. For the unicast communication, a PC5-S connection needs to be established between two terminal devices, and the PC5-S connection may also be referred to as a PCS unicast connection (unicast link) or a unicast connection. The PC5-S connection may be considered as a connection between upper layers of the terminal devices. A connection between AS layers may be considered as a PC5-RRC connection. After the PC5-S connection between the upper layers is established, the PC5-RRC connection corresponding to the AS layers is also considered to be established. In an actual application, a PC5-RRC connection establishment process does not need to be displayed. After the PC5-S connection is established, a PC5-RRC message may be transmitted directly on an SL signaling radio bearer (sidelink signaling radio bearer, SL-SRB) predefined in the protocol. Specifically, a unicast connection establishment procedure is shown in FIG. 2. Two terminal devices that need to establish a unicast connection are represented by UE1 and UE2. A message 1 is a PC5-S connection establishment request (Direct Communication Request) message sent by UE2 to UE1. A message 2 is a security mode activation command (Direct Security Mode Command) message sent by UE1 to UE2. A message 3 is a security mode activation complete (Direct Security Mode Complete) message fed back by UE2 to UE1. A message 4 is a PC5-S connection establishment accept (Direct Communication Accept) message fed back by UE1 to UE2. In a process of establishing the PC5-S connection, corresponding security is also established.

After the PC5-S connection between the upper layers of the terminal devices is established, the terminal device allocates, to each unicast connection, a PC5 connection identifier (PC5 link identifier) that is unique inside the terminal devices. The upper layer of the terminal device provides the AS layer with unicast connection profile (unicast link profile) information associated with the unicast connection. Specifically, the unicast link profile includes one or more of the following information: a V2X service type; an application layer identifier (application layer ID) and a layer 2 identifier L2 ID of a source terminal device; an application layer identifier (application layer ID) and a layer 2 identifier L2 ID of a destination terminal device; a network layer protocol corresponding to the unicast connection; and a group of PCS quality of service flow indicators (PCS QoS flow indicators, PFIs) associated with each V2X service type, and a group of QoS parameters associated with each PFI. The V2X service type may include a provider service identifier (provider service identifier, PSID) or an intelligent transportation system application identifier (ITS application identifier, ITS-AID).

(6) A sidelink radio bearer SLRB is a bearer that is at layer 2 and that is used to send and receive data on a sidelink. The SLRB may include an SL-SRB and a sidelink data radio bearer (sidelink data radio bearer, SL-DRB). The SLRB includes one or more of a packet data convergence protocol (packet data convergence protocol, PDCP) entity, a radio link control (radio link control, RLC) entity, and a logical channel (logical channel, LCH). One SLRB is uniquely associated with a group of address information, where the address information includes a source address identifier (for example, a source L2 ID) and a destination address identifier (for example, a destination L2 ID). The address information may further include a communication type (cast type). "cast type" may be unicast, multicast, or broadcast.

(7) PCS quality of service flow (PCS quality of service flow, PCS QoS flow): One PCS QoS flow is associated with one PFI. The PFI is an identifier allocated by an upper layer of a terminal device. The PFI is used to uniquely identify a QoS flow for a layer 2 destination address (destination L2 ID). One PFI is also associated with a group of QoS profiles (profiles). The QoS profile may include one or more of the following parameters: a PCS interface 5G quality of service identifier (PCS 5G quality of service identifier, PQI), a guaranteed flow bit rate (guaranteed flow bit rate, GFBR), a maximum flow bit rate (maximum flow bit rate, MFBR), a minimum required communication range (minimum required communication range, range), an allocation and retention priority (allocation and retention priority, ARP), a PCS link-aggregate maximum bit rate (PCS LINK-aggregate maximum bit rate, PCS LINK-AMBR), a default value (default value), a resource type (resource type), a priority level (priority level), a packet delay budget (packet delay budget, PDB), a packet error rate (packet error rate, PER), an averaging window (averaging window) (a QoS flow for a GBR resource type and a delay-critical GBR resource type), a maximum data burst volume (maximum data burst volume) (a QoS flow for a delay-critical GBR resource type), or the like. The resource type may be, for example, a guaranteed bit rate (guaranteed bit rate, GBR), a delay-critical GBR (Delay-critical GBR), or a non-GBR (Non-GBR). In embodiments of this application, the PCS QoS flow may be referred to as a QoS flow for short.

(8) In a relationship between a unicast connection and a service or a QoS flow, two terminal devices performing SL communication are represented by UE A and UE B. A PCS-S unicast connection between upper layers may include a plurality of V2X services (services), each service may also include a plurality of PCS QoS flows, and different QoS flows are distinguished by using QoS flow identifiers (PFIs) at a same destination address. For example, a PC5-S unicast connection 1 includes two V2X services: a V2X service A and a V2X service B. The service A includes a PCS QoS flow 1 and a PCS QoS flow 2, and the service A has a PCS QoS flow 3.

(9) Terms "system" and "network" may be used interchangeably in embodiments of this application. "At least one" means one or more, and " a plurality of" means two or more. A term " and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one (piece) of a, b, or c may represent: a, b, c, a-b, a-c, b-c, or a-b-c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a first message and a second message are merely used to distinguish between different messages, but do not indicate that the two messages are different in an information amount, content, a sending sequence, a priority, or importance.

The foregoing describes some terms in embodiments of this application. The following describes technical features in embodiments of this application.

Communication method provided in embodiments of this application may be applied to a 4th generation (4th generation, 4G) communication system, for example, a long term evolution (long term evolution, LTE), may be applied to a 5th generation (5th generation, 5G) communication system, for example, 5G new radio (new radio, NR), or may be applied to various future communication systems, for example, a 6th generation (6th generation, 6G) communication system or a 7th generation (7th generation, 7G) communication system. Embodiments of this application may also be applied to an integrated access and backhaul (integrated access and backhaul, IAB) scenario.

With development of technologies, relay communication used between UEs in a 5G NR technology is discussed in a 3GPP standard. In addition to the foregoing public security, improvement of network and user system performance, for example, coverage enhancement and capacity improvement, is mainly considered in the relay communication between the UEs in 5G NR.

Before the solutions are described, some concepts, terms, or implementation procedures mentioned in embodiments of this application are first described, to better understand the solutions provided in embodiments of this application.

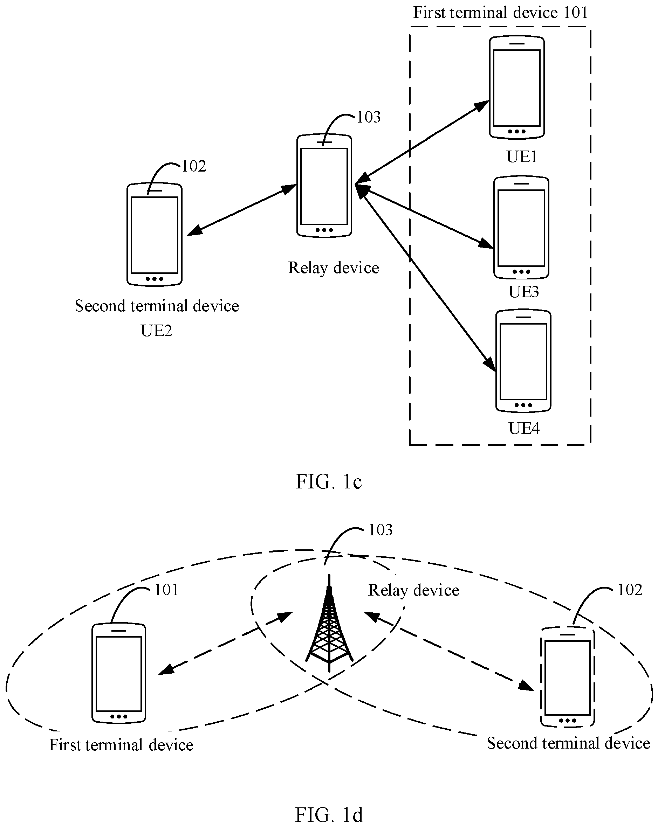

FIG. 1b is a schematic architectural diagram of a communication system that may be used in an embodiment of this application. The communication system includes at least two terminal devices: a first terminal device 101 and a second terminal device 102. The communication system may further include a relay device 103. The relay device 103 implements a relay forwarding function. The relay device 103 may be a terminal device, or may be a network device. This is not limited herein. The relay device may be one relay device, or may be a plurality of relay devices (not shown in the figure). Data transmission may be implemented between the first terminal device 101 and the second terminal device 102 through the relay device 103. The first terminal device 101 sends data to the second terminal device 102 through the relay device 103, and the second terminal device 102 sends data to the first terminal device 101 through the relay device 103. When the first terminal device 101 is located outside a coverage area or at an edge of the coverage area of the second terminal device 102, or the second terminal device 102 is located outside a coverage area or at an edge of the coverage area of the first terminal device 101, data may be forwarded through the relay device 103, to enhance sidelink coverage. The first terminal device 101 communicates with the relay device 103 through a sidelink, and the relay device 103 also communicates with the second terminal device 102 through a sidelink. The first terminal device 101 may be one terminal device, or may include a plurality of terminal devices. For example, as shown in FIG. 1c, when a terminal device is referred to as UE, the second terminal device 102 may be denoted as UE2, and the first terminal device 101 may include three third terminal devices (UE1, UE3 and UE4). For example, the first terminal device is UE1. UE2 establishes a unicast connection through the relay device to perform U2U relay communication with UE1, so that UE2 may send data to UE1 through the relay device.

The first terminal device 101, the second terminal device 102, and the relay device 103 may all be collectively referred to as terminal devices. For differentiation, a first communication apparatus, a second communication apparatus, and a relay apparatus may be used for representation. The first communication apparatus is corresponding to the first terminal device, the second communication apparatus is corresponding to the second terminal device, and the relay apparatus is corresponding to the relay device. In embodiments of this application, a device for implementing a function in the method is described by using a terminal device as an example.

When the terminal device is referred to as UE, a communication scenario shown in FIG. 1b may also be referred to as user equipment to user equipment relay (UE-to-UE relay, U2U relay) communication. SL unicast communication is performed between a source terminal device and the relay device and between the relay device and a destination terminal device. The source terminal device, the relay device, and the destination terminal device may be in an RRC connected mode, an RRC idle mode, an RRC inactive mode, or an OOC mode.

For example, the relay device is a base station. In a possible scenario, when the source terminal device and the destination terminal device are in coverage (in coverage, IC) of a network of the relay device (for example, the base station), the source terminal device and the destination terminal device may independently access the network of the relay device through a Uu interface. The network corresponding to the relay device may control allocation of communication configurations, communication resources, and the like on an uplink and a downlink between the source terminal device and the destination terminal device, for example, may perform real-time resource scheduling on the UL and the DL. For a case in which the source terminal device and the destination terminal device are in the IC mode of the relay device, refer to FIG. 1d. FIG. 1d includes a relay device 103 (for example, a base station 1), a first terminal device 101, and a second terminal device 102. The base station 1 is a base station accessed by the first terminal device 101, and the base station 1 is a base station accessed by the second terminal device 102. The base station 1 is a relay device of the first terminal device 101 and the second terminal device 102.

For ease of description, an example in which the relay device is a relay terminal device is used below for description. An operator may deploy a relay terminal device. The terminal device has a strong capability, for example, has more receive and transmit antennas. The relay terminal device may assist two terminal devices in U2U relay communication in data forwarding, to improve coverage and increase a communication distance. For example, when a coverage signal between one terminal device and the other terminal device is poor, or when one terminal device is located outside a coverage area of the other terminal device, a coverage area may be increased through the relay terminal device, and a capacity of a sidelink system may further be increased.

With reference to FIG. 1b, the second terminal device sends data to the first terminal device through the relay device. The second terminal device may also be referred to as a transmit end, a data transmit end, or a U2U relay data transmit end, and the first terminal device may also be referred to as a receive end, a data receive end, or a U2U relay data receive end. The first terminal device sends data to the second terminal device through the relay device. The first terminal device may also be referred to as a transmit end, a data transmit end, or a U2U relay data transmit end, and the second terminal device may also be referred to as a receive end, a data receive end, or a U2U relay data receive end. When FIG. 1b is applied to a scenario in which the second terminal device establishes a unicast connection to the first terminal device, if the second terminal device initiates a unicast connection establishment request, the second terminal device may also be referred to as an initiator for establishing an end-to-end unicast connection. If the first terminal device initiates the unicast connection establishment request, the second terminal device may also be referred to as a receive end for establishing the end-to-end unicast connection.

For example, the first terminal device is denoted as UE1, the second terminal device is denoted as UE2, and the relay device is denoted as relay UE. During UE-to-UE relay communication, there is one source UE2 (used as a source terminal device), one destination UE1 (used as a destination terminal device), and one or more relay devices, and unicast communication is required between UE2 and UE1. Transmission of data and signaling may be performed between UE2 and UE1 through the relay device. The source terminal device communicates with the relay device through a sidelink, and the relay device also communicates with the destination terminal device through a sidelink. UE2 communicates with UE1 through the relay UE. UE1 is located outside a coverage area of UE2 or at an edge of the coverage area of UE2, and UE2 needs to send data to UE1. UE2 may send the data to the relay UE, and the relay UE forwards the data to UE1. Similarly, UE2 is located outside a coverage area of UE1 or at an edge of the coverage area of UE1, and UE1 needs to send data to UE2. UE1 may send the data to the relay UE, and the relay UE forwards the received data to UE2. In this way, coverage of a sidelink between UE2 and UE1 is enhanced.

Currently, there may be two possible implementations of the UE-to-UE relay: an L3 (Layer 3/Layer 3)-based relay manner and an L2 (Layer 2/Layer 2)-based relay manner.

One possible relay form is the L3-based relay manner. For example, an L3 UE-to-UE relay architecture is used. On a user plane, the source terminal device, the relay device, and the destination terminal device perform relay at an IP layer. User plane data is forwarded through relay at the IP layer. For example, the relay device needs to parse a data packet sent by UE2 to UE1 to the IP layer, and determines, based on information such as a layer 2 identifier, to forward the data packet to UE2.

The other possible relay form is the layer 2 (layer 2, L2) relay. In the L2 relay-based manner, user plane data is relayed below a PDCP layer. FIG. 3 is a schematic diagram of protocol stacks on a user plane in the L2 relay. The protocol stack of the source terminal and the protocol stack of the destination terminal each include at least: an upper layer (for example, a V2X layer or a PC5-S layer), a service data adaptation protocol (service data adaptation protocol, SDAP) layer, a PDCP layer, an adaptation (Adaption) layer, a radio link control (radio link control, RLC) layer, a media access control (media access control, MAC) layer, and a physical layer (PHY layer). The protocol stack of the relay device includes at least: an adaptation layer, an RCL layer, a MAC layer, and a PHY layer. The SDAP layer, the PDCP layer, the RLC layer, the adaptation layer, the MAC layer, and the PHY layer may be collectively referred to as an access stratum (AS). The upper layer, including, for example, the PC5-S layer or the V2X layer, is a layer above the access stratum. For a definition and a function of a protocol layer, for example, the SDAP layer, the PDCP layer, or the RLC layer, refer to descriptions in the existing technology. Details are not described herein again.

In the foregoing two relay manners, the source terminal device sends data to the destination terminal device through the relay device. However, when the source terminal device forwards the data to the relay device, a protocol layer below the RLC layer of the source terminal device does not perceive a layer 2 identifier of the peer terminal device. When the destination terminal device also receives the data through the relay device, a protocol layer below the RLC layer of the destination terminal device does not perceive a layer 2 identifier of the peer terminal device either. This may cause some problems. For example, with reference to FIG. 1c, a same unicast connection established between the source terminal device (for example, UE2) and the relay terminal device is associated with a plurality of unicast connections between the relay terminal device and different destination terminal devices (for example, UE1, UE3, and UE4). In this case, because the source terminal device cannot perceive a layer 2 identifier of the destination terminal device, different resources or bearer configurations cannot be requested based on the different destination terminal devices. Only a same resource or bearer configuration is used for the different destination terminal devices. Consequently, transmission quality of data transmission of some destination terminal devices may be poor, and preset transmission quality requirements of the destination terminal devices cannot be met.

The following describes a relay process of user plane data, to describe a reason why the source terminal device cannot perceive the layer 2 identifier of the destination terminal device. The relay terminal device maintains a relay RLC bearer, and relays data transmitted through a sidelink between the second terminal device (for example, UE2) and the first terminal device (for example, UE1).

The relay terminal device allocates, to a communication link between the source terminal device and the relay terminal device, a second identifier of the relay terminal device, for example, an identifier B2, dedicated to transmission of a data packet sent and received between the source terminal device and the relay terminal device in the U2U relay. The relay terminal device allocates, to a communication link between the destination terminal device and the relay terminal device, a first identifier of the relay terminal device, for example, an identifier B 1, dedicated to transmission of a data packet sent and received between the destination terminal device and the relay terminal device in the U2U relay.

An identifier of the source terminal device may be an identifier allocated by the source terminal device, or may be an identifier allocated by the relay terminal device to the source terminal device, for example, an identifier A. For example, refer to FIG. 3. A transmission data packet whose source address is the identifier A and whose destination address is the identifier B2 is sent between the source terminal device and the relay terminal device. For example, for transmission from the second terminal device to the relay terminal device, when sending the data packet to the relay terminal device, the second terminal device uses the identifier A as the source address, and uses the second identifier B2 that is set by the relay terminal device for the communication link between the source terminal device and the relay terminal device as the destination address, to send the data packet to the relay terminal device by using a sidelink radio bearer between the second terminal device and the relay terminal device.

After the relay terminal device receives the data packet, the relay terminal device modifies the identifier of the source terminal device and the second identifier of the relay terminal device to the first identifier of the relay terminal device and the identifier of the destination terminal device, and forwards the data packet to the destination terminal device. The forwarded data packet is associated with the first identifier of the relay terminal device and the identifier of the destination terminal device.

For example, for a data packet sent by the source terminal device, the relay terminal device parses the data packet, and determines that the identifier A and the identifier B2 are corresponding to the identifier B1 and an identifier C, to modify the source address and the destination address of the data packet. The relay terminal device needs to replace the source address of the data packet with the first identifier of the relay terminal device, for example, the identifier B1. The destination address is replaced with an identifier of the first terminal device. The identifier of the first terminal device may be an identifier allocated by the destination terminal device, or may be an identifier allocated by the relay terminal device to the destination terminal device, for example, the identifier C. In this case, the relay terminal device sends, to the first terminal device, the data packet in which the source address and the destination address are replaced.

Correspondingly, for the data packet sent to the relay terminal device for the destination terminal device, the source address carried in the data packet may be the identifier C, and the destination address is the first identifier of the relay terminal device, for example, the identifier B1. After the relay terminal device receives the data packet, the relay terminal device needs to replace the destination address of the data packet with the identifier of the second terminal device, for example, the identifier A, replace the source address with the second identifier of the relay terminal device, for example, the identifier B2, and send the replaced data packet to UE2.

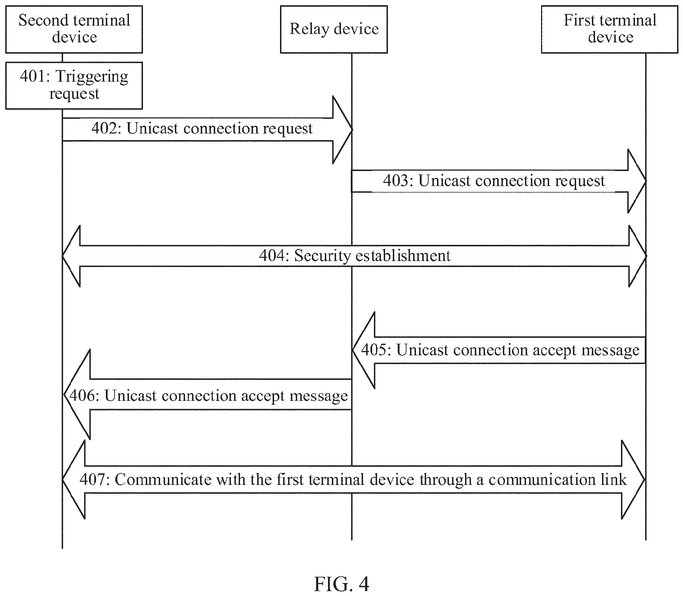

Specifically, a process in which the relay terminal device sets corresponding identifiers for communication links of the source terminal device and the destination terminal device may be set in a corresponding unicast connection process. Communication between the first terminal device and the second terminal device is used as an example. The two terminal devices may communicate with each other through a relay device. A link for communication through the relay device may be referred to as a relay link. For example, in FIG. 1b, relay links for communication between the first terminal device and the second terminal device through the relay device may include two links: a link between the first terminal device and the relay device, and a link between the relay device and the second terminal device. As shown in FIG. 4, a process of establishing a unicast connection is described by using an example in which a second terminal device initiates a unicast connection establishment request. The process includes the following steps.

Step 401: The second terminal device triggers establishment of a communication link when a specified condition is met.

The communication link includes a first communication link and a second communication link. The first communication link is a link between a first terminal device and a relay device, and the second communication link is a link between the second terminal device and the relay device.

When a trigger condition is met, the second terminal device triggers establishment of the second communication link or triggers sending of a corresponding unicast connection establishment request (direct communication request) message.

In an NR V2X manner, the second terminal device (for example, UE2) may initiate the unicast connection establishment request message in a plurality of manners, for example, a UE-triggered manner and a service-triggered manner.

In a possible implementation, before the second terminal device UE2 establishes a connection to a destination terminal device (for example, UE1), the second terminal device UE2 determines a layer 2 identifier (destination L2 ID) of the first terminal device by using an application layer of an upper layer or the like. The layer 2 identifier of the destination terminal device may be an identifier that is configured by the upper layer for the destination terminal device and that is used for the unicast connection. For example, the destination terminal device UE1 may determine the layer 2 identifier of UE1, a destination terminal device UE3 may determine a layer 2 identifier of UE3, and a destination terminal device UE4 may determine a layer 2 identifier of UE4. Further, the destination terminal device compares a layer 2 identifier corresponding to received unicast connection establishment PC5-S signaling, to determine whether to parse the unicast connection establishment PC5-S signaling.

After an upper layer of a source terminal device determines the layer 2 identifier of the destination terminal device, the second terminal device UE2 may send a unicast connection establishment request (direct communication request) message in unicast mode, that is, a destination address of the message is the layer 2 identifier corresponding to UE1 (for example, L2 ID1). In this case, if agreeing to establish a unicast connection, UE1 may return a unicast connection establishment accept (direct communication accept) message in unicast mode.

In another possible implementation, the second terminal device UE2 may trigger a unicast connection request to the destination terminal device by using a service. UE2 determines, by using an application layer of an upper layer or the like, a service (for example, a V2X service) for which a connection needs to be established, and determines a layer 2 identifier corresponding to the service. UE2 sends a unicast connection establishment request message in broadcast mode, where a destination address of the message is a layer 2 identifier corresponding to the V2X service. UE (for example, UE1 or UE4) that is interested in the corresponding service returns a unicast connection establishment accept message in unicast mode.

Step 402: The second terminal device sends a unicast connection establishment request (direct communication request) message.

The unicast connection establishment request message may include an application identifier, an application layer identifier of UE1, an application layer identifier of destination UE, indication information indicating that relay is supported, and the like.

The unicast connection establishment request message sent by the source terminal device may be sent to the relay device in unicast mode after the relay device is determined. A manner of determining the relay device may be that the relay device broadcasts a discovery (discovery) message or a notification (announcement) message to a surrounding terminal device. The notification message is used as an example. The notification message indicates that the relay device has a relay capability. The notification message may be sent to the surrounding terminal device through a PCS interface. The surrounding terminal device determines, by receiving the notification message, that the relay device has the relay capability. Alternatively, the source terminal device may send the unicast connection establishment request message in broadcast mode, and the relay device determines whether to establish the unicast connection to the destination terminal device. This is not limited herein.

Step 403: The relay device receives the unicast connection establishment request message sent by the second terminal device UE2, and forwards the unicast connection establishment request message.

The relay device may determine, based on application information (for example, the indication information indicating that relay is supported, the application identifier, an application layer identifier of UE2, and the application layer identifier of the destination UE) in the unicast connection establishment request message and application information configured for the relay device, whether the application is supported. If a matching result is supported, the relay device may allocate, to the first communication link between the relay device and the destination relay device, a first identifier of the relay device, for example, R1-L2-ID-a or an identifier B1. The first identifier is associated with a layer 2 identifier of the source terminal device, and is used for forwarding of the unicast connection establishment request message and subsequent communication between the relay device and the first terminal device (UE1).

In the forwarded unicast connection establishment request message, a source address may be modified to the first identifier (for example, R1-L2-ID-a or the identifier B1), and the destination address may still be the layer 2 identifier of UE1. In addition, an identifier of the relay device may be further added to the forwarded unicast connection establishment request message. For example, the identifier of the relay device may be a unique relay identifier (unique relay identifier, RID). For example, a unique relay identifier of a first relay device may be represented as RID1. A unique relay identifier of a second relay device may be represented as RID2.

Step 404: The second terminal device and the first terminal device trigger a security mode establishment procedure.

The first terminal device is interested in an application indicated in the unicast connection establishment request message, triggers the security mode establishment procedure with the second terminal device, and after establishing security by using the upper layer, notifies an AS layer of corresponding security configurations (a security algorithm, a security parameter, a security policy, and the like). The AS layer forwards, by using the corresponding security configurations and through the relay device, a message in a security mode establishment process. Therefore, security protection is performed on a PC5-S message, a PC5-RRC message, and user plane data that are transmitted between the source terminal device and the destination terminal device through the relay device. For a specific process, refer to the manner in FIG. 2.

It may be understood that the relay device receives a security mode establishment command (Direct Security Mode Command) message sent by the first terminal device, and the relay device determines, based on a mapping relationship stored by the relay device, that the message needs to be forwarded to the second terminal device. Therefore, the relay device allocates, to the relay device, a second identifier of the relay device, for example, R1-L2-ID-b or an identifier B2. The second identifier of the relay device is associated with the layer 2 identifier of the destination terminal device, and is used for communication between the relay device and the second terminal device.

For example, when the relay device receives, through the second communication link, a message sent by the second terminal device to the first terminal device, a destination address of the message is the second identifier (for example, R1-L2-ID-b) of the relay device, and a source address is the L2 ID of the second terminal device. When the relay device forwards the message of the second terminal device to the first terminal device through the first communication link, a source address of the message is the first identifier (for example, R1-L2-ID-a or the identifier B1), and a destination address is the layer 2 identifier of the first terminal device.

Therefore, the relay device maintains mapping relationship of a layer 2 identifier of the first communication link between the relay device and the first terminal device (UE1) and a layer 2 identifier of the second communication link between the relay device and the second terminal device (UE2). For example, the relay device is a first relay terminal device. A mapping relationship maintained by the first relay terminal device for the first terminal device (UE1) and the second terminal device (UE2) may be shown in Table 1.

**Table 1**

| Communication link | Transmitting terminal device | Receiving terminal device | Source address | Destination address |
|---|---|---|---|---|
| Second communication link | UE2 | First relay terminal device | Layer 2 identifier of UE2 (L2 ID2) | Second identifier (R1-L2-ID-b or B2) (where the second identifier is associated with the L2 ID1) |
| Second communication link | First relay terminal device | UE2 | Second identifier (R1-L2-ID-b or B2) | Layer 2 identifier of UE2 (L2 ID2) |
| First communication link | UE1 | First relay terminal device | Layer 2 identifier of UE1 (L2 ID1) | First identifier (R1-L2-ID-a or B1) (where the first identifier is associated with the L2 ID2) |
| First communication link | First relay terminal device | UE1 | First identifier (R1-L2-ID-a or B1) | Layer 2 identifier of UE1 (L2 ID1) |

Step 405: The relay device receives a unicast connection establishment accept (Direct Communication Accept) message sent by the first terminal device UE1.

With reference to Table 1, the first relay device receives the message through the first communication link. A source address of the message may be the layer 2 identifier of the first terminal device UE1, and a destination address of the message may be the first identifier of the first relay device.

Step 406: The relay device forwards, to the second terminal device UE2, the unicast connection establishment accept message sent by the first terminal device UE1.

With reference to Table 1, the first relay device sends the message through the second communication link. A source address of the message may be the second identifier of the first relay device, and a destination address of the message may be the layer 2 identifier of the second terminal device UE2.

After a U2U relay unicast connection is established, one unicast connection is uniquely associated with a pair of a source layer 2 identifier (source L2 ID) and a target layer 2 identifier (destination L2 ID). To be specific, in a unicast connection between the source terminal device and the relay device, the layer 2 identifier of the source terminal device is associated with the second identifier of the relay device. In a unicast connection between the relay device and the destination terminal device, the layer 2 identifier of the destination terminal device is associated with the first identifier of the relay device.

Optionally, after a destination communication link is established, step 407 may be further included.

Step 407: The second terminal device communicates with the first terminal device through the communication link.

The sidelink communication may include one of two communication directions, or the two communication directions may coexist. The two communication directions are as follows:
(1) The second terminal device sends data to the first terminal device.

The second terminal device sends first data to the first relay device through the second communication link. A source address of the first data is the layer 2 identifier of the second terminal device, and a destination address of the first data is the second identifier (for example, R1-L2-ID-b) of the first relay device. After receiving the first data, the first relay device modifies the source address to the first identifier (for example, R1-L2-ID-a) of the first relay device, and modifies the destination address to the identifier of the first terminal device. The first relay device forwards second data to the first terminal device through the first communication link.

(2) The first terminal device sends data to the second terminal device.

The first terminal device sends second data to the first relay device through the first communication link. A source address of the second data is the layer 2 identifier of the first terminal device, and a destination address of the second data is the first identifier (R1-L2-ID-a) of the first relay device. After receiving the second data, the first relay device modifies the source address to the second identifier (R1-L2-ID-b) of the first relay device, and modifies the destination address to the identifier of the second terminal device. The first relay device forwards the second data to the second terminal device through the second communication link.

In addition, the first terminal device may further implement relay communication between the first terminal device and the second terminal device in a multi-hop manner. For example, the first terminal device communicates with the second terminal device through the first relay device and a second relay device.

In the foregoing relay process, after the U2U relay unicast connection is established, the relay terminal device can identify a data packet from the source terminal device. However, protocol layers below RLC layers of the source terminal device and the destination terminal device only send data packets to the relay device or receive data packets from the relay device, but do not know that some of the data packets are actually associated with the source terminal device or the destination terminal device. That is, the protocol layers below the RLC layers of the source terminal device and the destination terminal device do not perceive a layer 2 identifier of a peer terminal device. This causes some problems. For example, a same unicast connection established between the source terminal device (UE2) and the relay device is associated with a plurality of unicast links between the relay device and different destination terminal devices (for example, UE1, UE3, and UE4). In this case, only a same resource or bearer configuration is used for the different destination terminal devices. Consequently, transmission quality of data transmission of some destination terminal devices may be poor, and preset transmission quality requirements of the destination terminal devices cannot be met.

In view of this, the technical solutions in embodiments of this application are provided. Based on the descriptions of the V2X communication architectures 100 shown in FIG. 1a to FIG. 1d, in the following description process, an example in which the method is applied to the network architectures shown in FIG. 1b and FIG. 1c is used. The following describes in detail the communication method provided in embodiments of this application. For application scenarios of embodiments of this application, refer to FIG. 1a to FIG. 1d. For ease of description, an example in which the method is performed by a relay device and a terminal device is used in the following descriptions. Therefore, for example, an embodiment of this application is applied to the network architecture shown in FIG. 1b. Therefore, the relay device in the following descriptions may be the terminal device in the network architecture shown in FIG. 1b. The first terminal device in the following descriptions may be the first terminal device 101 in the network architecture shown in FIG. 1b, and the second terminal device in the following descriptions may be the terminal device 102 in the network architecture shown in FIG. 1b. For example, the first terminal device 101 may be UE1, and the second terminal device 102 may be UE2. An L2 ID used for allocation by UE1 is L2 ID 1, an L2 ID used for allocation by UE2 is L2 ID 2, and an L2 ID used for allocation by the relay device may include a first identifier (for example, L2 ID a) (used for communication between the relay device and UE1) and a second identifier (for example, L2 ID b) (used for communication between the relay device and the UE2).

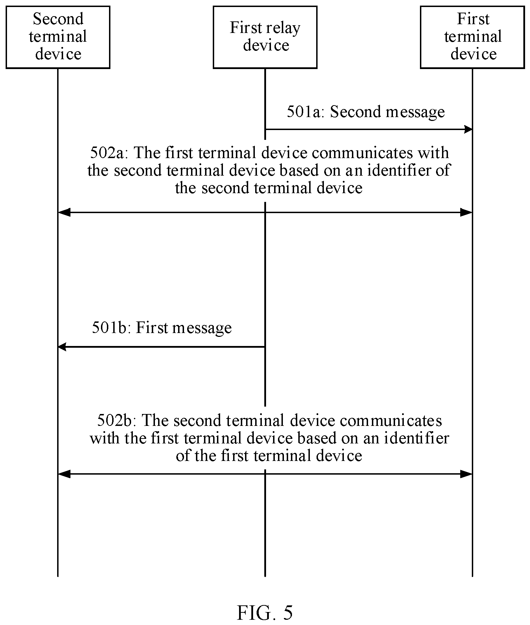

An embodiment of this application provides a first communication method. FIG. 5 is a flowchart of the method. Specifically, the following steps may be included.

Step 501a: A first relay device sends a second message to a first terminal device.

The second message includes an identifier of a second terminal device.

The identifier of the second terminal device may be a layer 2 identifier of the second terminal device, an adaptation layer identifier of the second terminal device, or an identifier allocated by the first relay device to the second terminal device.

In a possible implementation, the relay device may send the second message to the first terminal device or send a first message to the second terminal device in a unicast connection establishment process, and the second message may be any one of the following: a unicast connection establishment request message, a unicast connection establishment accept message, a security mode activation command message, or a security mode activation complete message. Alternatively, the second message may be sent after a unicast connection is established, and the second message may be any one of the following: a PC5-RRC message, a PC5-S message, or the like.

Step 502a: The first terminal device communicates with the second terminal device based on the identifier of the second terminal device.

An example in which the first terminal device receives, through a first communication link, third data that is forwarded by the second terminal device through the first relay device is used below for description.

With reference to FIG. 3, a second protocol layer of the first terminal device receives the third data, where the third data is data that is received by the first terminal device from the second terminal device through the first relay device. In a data packet of the third data received by the second protocol layer, a source address is a first identifier of the first relay device, and a destination address is an identifier of the first terminal device. That is, the third data is associated with the first identifier of the first relay device and the identifier of the first terminal device. To enable the third data to be identified by an upper layer of the first terminal device as data corresponding to the second terminal device, when the third data is delivered to a first protocol layer of the first terminal device, the source address needs to be modified to the identifier of the second terminal device. That is, the source address may be modified by using the second protocol layer of the first terminal device. To be specific, the second protocol layer of the first terminal device determines the fourth data based on the third data. A source address of the fourth data is the identifier of the second terminal device, and a destination address of the fourth data is the identifier of the first terminal device. That is, the fourth data is associated with the identifier of the second terminal device and the identifier of the first terminal device. Optionally, the destination address of the third data may be different from the destination address (the identifier of the first terminal device) of the fourth data. That is, the destination address of the third data may alternatively be modified. Therefore, after the second protocol layer of the first terminal device delivers the fourth data to the first protocol layer of the first terminal device, the first protocol layer of the first terminal device and an upper layer of the first protocol layer may identify that the fourth data is data from the second terminal device.

The source address may be modified by using different protocol layers. For example, the second protocol layer may be an RLC layer or an adaptation layer, and the first protocol layer may be the adaptation layer or a PDCP layer. Manner a1 and Manner a2 are used as examples below for description.

Manner a1: The second protocol layer is the RLC layer, and the first protocol layer is the adaptation layer or the PDCP layer. The RLC layer receives the third data from the first relay device, where the source address of the third data is the first identifier (for example, R1-L2 ID-a) of the first relay device, and the destination address is the identifier (for example, L2 ID1) of the first terminal device. The RLC layer modifies the source address in the third data to the layer 2 identifier (for example, L2 ID2) of the second terminal device, to determine the fourth data. The RLC layer delivers the fourth data to the adaptation layer or the PDCP layer, so that after receiving the fourth data, the PDCP layer or the upper layer identifies that the fourth data is data from the first terminal device.

Manner a2: The second protocol layer is the adaptation layer, and the first protocol layer is the PDCP layer. The adaptation layer receives the third data from the first relay device, where the source address of the third data is the first identifier (for example, R1-L2 ID-a) of the first relay device, and the destination address is the identifier (for example, L2 ID1) of the first terminal device. The adaptation layer modifies the source address in the third data to the layer 2 identifier (for example, L2 ID2) of the second terminal device, to determine the fourth data. The adaptation layer delivers the fourth data to the PDCP layer, so that after receiving the fourth data, the PDCP layer or the upper layer identifies that the fourth data is data from the first terminal device.

Step 501b: The first relay device sends the first message to the second terminal device.

The first message includes the identifier of the first terminal device.

The identifier of the first terminal device may be a layer 2 identifier of the first terminal device, an adaptation layer identifier of the first terminal device, or an identifier allocated by the first relay device to the first terminal device.

In a possible implementation, the relay device may alternatively send the first message to the second terminal device or send the second message to the first terminal device in a data transmission process after the unicast connection is established. The first message may be any one of the following: a unicast connection establishment request message, a unicast connection establishment accept message, a security mode activation command message, or a security mode activation complete message. Alternatively, the first message may be sent after the unicast connection is established, and the first message may be any one of the following: a PC5-RRC message, a PC5-S message, or the like.

Therefore, the first message may be any one of the following: the unicast connection establishment request message, the unicast connection establishment accept message, the security mode activation command message, the security mode activation complete message, the PC5-RRC message, or the PC5-S message.

Step 502b: The second terminal device communicates with the first terminal device based on the identifier of the first terminal device.

In a possible implementation, for example, the second terminal device is a source terminal device. The second terminal device may request, for the first terminal device based on the identifier of the first terminal device, a radio bearer configuration corresponding to the first terminal device. Specifically, the following steps may be included.

Step 5021b: The second terminal device sends a first request message to an access network device.

The first request message requests first radio bearer configuration information corresponding to the first terminal device. The first request message may include the first QoS information and the identifier of the first terminal device.

The first QoS information is QoS information corresponding to UE1.

For example, the access network device may be a serving base station with which the second terminal device registers. The first request message may be a sidelink user information (sidelink UE information, SUI) message. The SUI message may carry address information of the first terminal device (for example, the identifier of the first terminal device (for example, a destination ID) or a type (cast type) of the first terminal device) and QoS information (for example, a QoS flow identifier (QoS flow ID) and/or a QoS profile (QoS profile)). Therefore, the access network device is requested to configure the first radio bearer configuration information for the first terminal device by using the QoS information reported in the first request message.

Step 5022b: The access network device determines the first radio bearer configuration information based on the first request message.

The configuration information of the first radio bearer may be configuration information of an SLRB required by a communication link between the second terminal device and the first terminal device.

Step 5023b: The access network device sends a first response message to the second terminal device.

The first response message may include the first radio bearer configuration information.

Therefore, the second terminal device may establish a corresponding radio bearer based on the first radio bearer configuration information, and send data to the first terminal device through the first relay device or receive data from the first terminal device through the first relay device.

An example in which the second terminal device sends the first data to the first terminal device is used below for description.

With reference to FIG. 3, the upper layer of the second terminal device determines the first data, where the first data is data sent by the second terminal device to the first terminal device through the first relay device.

The upper layer of the second terminal device (the application layer, the V2X layer, the SDAP layer, or the like) determines the first data, and transmits the first data to the first protocol layer. In a data packet of the first data received by the first protocol layer, a source address is the second terminal device, and a destination address is the first terminal device. That is, the first data is associated with the identifier of the second terminal device and the identifier of the first terminal device. To enable the first data to be forwarded to the first terminal device through the first relay device, the destination address needs to be modified to the second identifier of the first relay device when the first data is delivered to the second protocol layer. Therefore, the first protocol layer may be used to modify the destination address. To be specific, the first protocol layer determines the second data based on the first data. A source address of the second data is the identifier of the second terminal device, and a destination address of the second data is the second identifier of the first relay device. That is, the second data is associated with the identifier of the second terminal device and the second identifier of the first relay device. Optionally, the source address of the first data may be different from the source address (the identifier of the second terminal device) of the second data. That is, the source address of the first data may alternatively be modified. Therefore, after delivering the second data to the second protocol layer, the first protocol layer may send the second data to the first relay device. The first relay device determines, based on the source address and the destination address of the second data, that the second data is data forwarded to the first terminal device.

The destination address may be modified by using different protocol layers. For example, the first protocol layer may be a PDCP layer or an adaptation layer, and the second protocol layer may be the adaptation layer or an RLC layer. Manner b1 and Manner b2 are used as examples below for description.

Manner b1: The first protocol layer is the PDCP layer, and the second protocol layer is the adaptation layer or the RLC layer. The PDCP layer receives the first data from the upper layer, where the source address of the first data is the layer 2 identifier (for example, L2 ID2) of the second terminal device, and the destination address is the identifier (for example, L2 ID1) of the first terminal device. The PDCP layer modifies the destination address in the first data to the second identifier (for example, R1 -L2-ID-b) of the first relay device, to determine the second data. The second data is delivered to the adaptation layer or the RLC layer, so that after receiving the second data, the RLC layer may further transfer the second data to the MAC layer and the PHY layer, and send the second data to the first relay device.

Manner b2: The first protocol layer is the adaptation layer, and the second protocol layer is the RLC layer. The adaptation layer receives the first data from the upper layer, where the source address of the first data is the layer 2 identifier (for example, L2 ID2) of the second terminal device, and the destination address is the identifier (for example, L2 ID1) of the first terminal device. The adaptation layer modifies the destination address in the first data to the second identifier (for example, R1-L2-ID-b) of the first relay device. Therefore, the adaptation layer determines the second data. The adaptation layer delivers the second data to the RLC layer, so that after receiving the second data, the RLC layer may further transfer the second data to the MAC layer and the PHY layer, and send the second data to the first relay device.

An end-to-end L2 ID is obtained during a U2U relay unicast connection establishment process, and the protocol layers of UE1 and UE2 maintains an L2 ID mapping relationship. In this way, a bearer model can be properly maintained, and normal communication of U2U relay can be ensured.

Example 1 to Example 4 are used below to describe implementations of step 501a and step 501b in the communication method in FIG. 5.

### Example 1

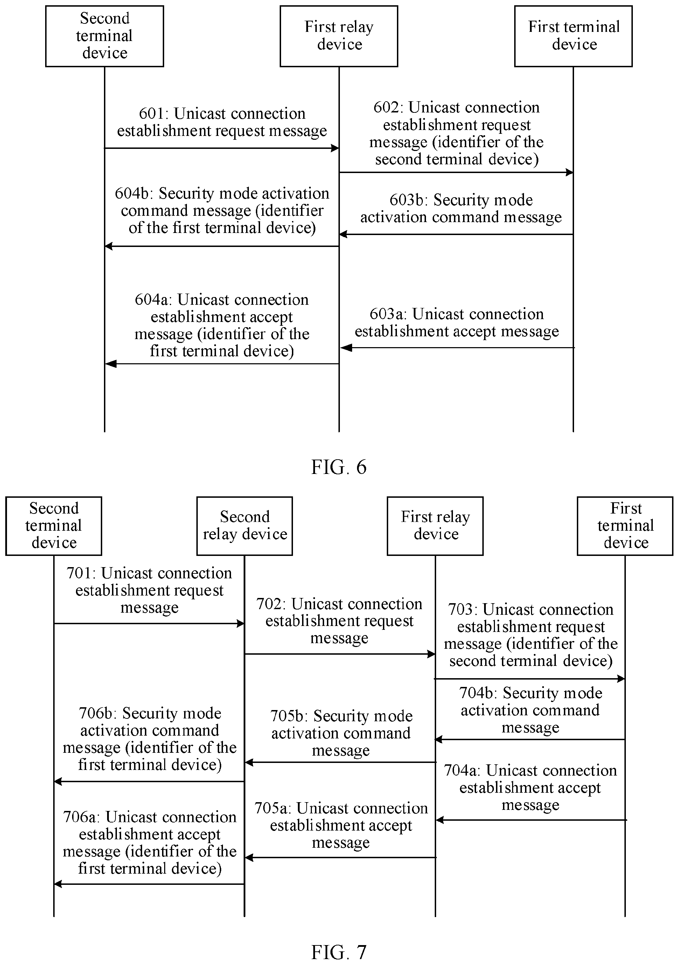

An embodiment of this application provides a communication method. FIG. 6 is a flowchart of the method. In the communication method, in a U2U unicast connection establishment process, a first terminal device and a second terminal device learn of an identifier of the peer end through a first relay device, to improve an association relationship of L2 IDs in a bearer model, and improve performance of communication between the first terminal device and the second terminal device through the first relay device. Specifically, the following steps may be included.

Step 601: The second terminal device sends a unicast connection establishment message.

In a possible implementation, the unicast connection establishment request message includes an identifier (for example, L2 ID 2) of the second terminal device, and may further include an adaptation layer identifier corresponding to the second terminal device.

In another possible implementation, the unicast connection establishment request message does not include a layer 2 identifier of the second terminal device, but carries the layer 2 identifier or the adaptation layer identifier of the second terminal device by using a MAC layer or an adaptation layer of the unicast connection establishment request message.

Step 602: The first relay device sends the unicast connection establishment request message to the first terminal device.

In a possible implementation, the unicast connection establishment request message may include the identifier (for example, L2 ID2) of the second terminal device, and may further include the adaptation layer identifier corresponding to the second terminal device.

In another possible implementation, the first relay device adds, to the unicast connection establishment request message in step 602, the layer 2 identifier (L2 ID2) that is of the second terminal device and that is carried in the unicast connection establishment request message at the MAC layer or the adaptation layer in step 601.

Step 603a: The first terminal device sends a unicast connection establishment accept message to the first relay device.

Optionally, the unicast connection establishment accept message may include a layer 2 identifier L2 ID 2 of the first terminal device, and may further include an adaptation layer identifier corresponding to the first terminal device.

Optionally, the unicast connection establishment accept message does not include the layer 2 identifier of the first terminal device, but carries the layer 2 identifier or the adaptation layer identifier of the first terminal device by using a MAC layer or an adaptation layer of the unicast connection establishment accept message.

Step 603b: The first terminal device sends a security mode activation command message to the first relay device.

In a possible implementation, the security mode activation command message may include the layer 2 identifier L2 ID 1 of the first terminal device, and may further include the adaptation layer identifier corresponding to the first terminal device.

In another possible implementation, the security mode activation command message does not include the layer 2 identifier of the first terminal device, but carries the layer 2 identifier or the adaptation layer identifier of the first terminal device by using a MAC layer or an adaptation layer of the security mode activation command message

Step 604a: The first relay device sends the unicast connection establishment accept message to the second terminal device.

Optionally, the unicast connection establishment accept message may include the layer 2 identifier of the first terminal device (for example, the layer 2 identifier L2 ID1 of UE1), and may further include the adaptation layer identifier corresponding to the first terminal device.

Optionally, the first relay device may add, to the unicast connection establishment accept message in step 604a, the layer 2 identifier (L2 ID2) that is of the first terminal device and that is carried in the message at the MAC layer or the adaptation layer in step 603a or step 603b.

Step 604b: The first relay device sends the security mode activation command message to the second terminal device.

In a possible implementation, the security mode activation command message may include the layer 2 identifier of the first terminal device (for example, the layer 2 identifier L2 ID1 of UE1), may further include the adaptation layer identifier corresponding to the first terminal device.

In another possible implementation, the first relay device may add, to the security mode activation command message in step 604b, the layer 2 identifier (L2 ID2) that is of the first terminal device and that is carried in the message at the MAC layer or the adaptation layer in step 603b.

It should be noted that, to avoid repeatedly sending the layer 2 identifier of the first terminal device, the layer 2 identifier of the first terminal device may be carried in steps 603a and 604a, or the layer 2 identifier of the first terminal device may be carried in steps 603b and 604b.

### Example 2

Considering a multi-hop scenario in U2U relay, an embodiment of this application provides a communication method. As shown in FIG. 7, two hops are used as an example for description. For another multi-hop scenario, refer to this embodiment. Details are not described herein again. Specifically, the following steps may be included.

Step 701: A second terminal device UE2 sends a unicast connection establishment request message to a second relay device.

In a possible implementation, the unicast connection establishment request message includes a layer 2 identifier (L2 ID 2) of the second terminal device.

In another possible implementation, the unicast connection establishment request message does not include the layer 2 identifier of the second terminal device, but carries the layer 2 identifier of the second terminal device by using a MAC layer or an adaptation layer of the unicast connection establishment request message.

Step 702: The second relay device sends the unicast connection establishment request message to a first relay device.

In a possible implementation, the unicast connection establishment request message includes the identifier (L2 ID2) of the second terminal device.

In another possible implementation, the unicast connection establishment request message does not carry the layer 2 identifier of the second terminal device. The second relay device may carry the layer 2 identifier of the second terminal device by using the MAC layer or the adaptation layer of the unicast connection establishment request message

Step 703: The first relay device sends the unicast connection establishment request message to a first terminal device.

In a possible implementation, the unicast connection establishment request message includes the identifier (L2 ID 2) of the second terminal device.

In another possible implementation, the first relay device adds, to the unicast connection establishment request message in step 703, the layer 2 identifier (L2 ID2) that is of the second terminal device and that is carried in the unicast connection establishment request message at the MAC layer or the adaptation layer in step 702.

Step 704a: The first terminal device sends a unicast connection establishment accept message to the first relay device.

Optionally, the unicast connection establishment accept message includes a layer 2 identifier (L2 ID1) of the first terminal device, and may further include an adaptation layer identifier corresponding to the first terminal device.

Optionally, the unicast connection establishment accept message does not include the layer 2 identifier of the first terminal device, but carries the layer 2 identifier of the first terminal device by using a MAC layer or an adaptation layer of the unicast connection establishment accept message.

Step 704b: The first terminal device sends a security mode activation command message to the first relay device.

In a possible implementation, the security mode activation command message may include the layer 2 identifier (L2 ID 1) of the first terminal device, and may further include the adaptation layer identifier corresponding to the first terminal device.

In another possible implementation, the security mode activation command message does not include the layer 2 identifier of the first terminal device, but carries the layer 2 identifier of the first terminal device by using a MAC layer or an adaptation layer of the security mode activation command message.

Step 705a: The first relay device sends the unicast connection establishment accept message to the second relay device.

Optionally, the unicast connection establishment accept message may include the layer 2 identifier (L2 ID1) of the first terminal device, and may further include the adaptation layer identifier corresponding to the first terminal device.

Optionally, the unicast connection establishment accept message does not include the layer 2 identifier of the first terminal device, but carries the layer 2 identifier of the first terminal device by using the MAC layer or the adaptation layer of the unicast connection establishment accept message.

Step 705b: The first relay device sends the security mode activation command message to the second relay device.

In a possible implementation, the security mode activation command message includes the layer 2 identifier (L2 ID1) of the first terminal device, and may further include the adaptation layer identifier corresponding to the first terminal device.

In another possible implementation, the security mode activation command message does not include the layer 2 identifier of the first terminal device, but carries the layer 2 identifier of the first terminal device by using the MAC layer or the adaptation layer of the security mode activation command message.

Step 706a: The second relay device sends the unicast connection establishment accept message to the second terminal device.

Optionally, the unicast connection establishment accept message includes the layer 2 identifier (L2 ID1) of the first terminal device, and may further include the adaptation layer identifier corresponding to UE1.

Optionally, the second relay device adds, to the unicast connection establishment accept message in step 706a, the layer 2 identifier (L2 ID2) that is of the first terminal device and that is carried in the message at the MAC layer or the adaptation layer in step 705a or step 705b.

Step 706b: The second relay device sends the security mode activation command message to the second terminal device.

In a possible implementation, the security mode activation command message includes the layer 2 identifier (L2 ID1) of the first terminal device, and may further include the adaptation layer identifier corresponding to the first terminal device.

In another possible implementation, the second relay device adds, to the security mode activation command message in step 706b, the layer 2 identifier (L2 ID2) that is of the first terminal device and that is carried in the security mode activation command message at the MAC layer or the adaptation layer in step 705b.

It should be noted that, to avoid repeatedly sending the layer 2 identifier of the first terminal device, the layer 2 identifier of the first terminal device may be carried in steps 704a to 706a, or the layer 2 identifier of the first terminal device may be carried in steps 704b to 706b.

### Example 3

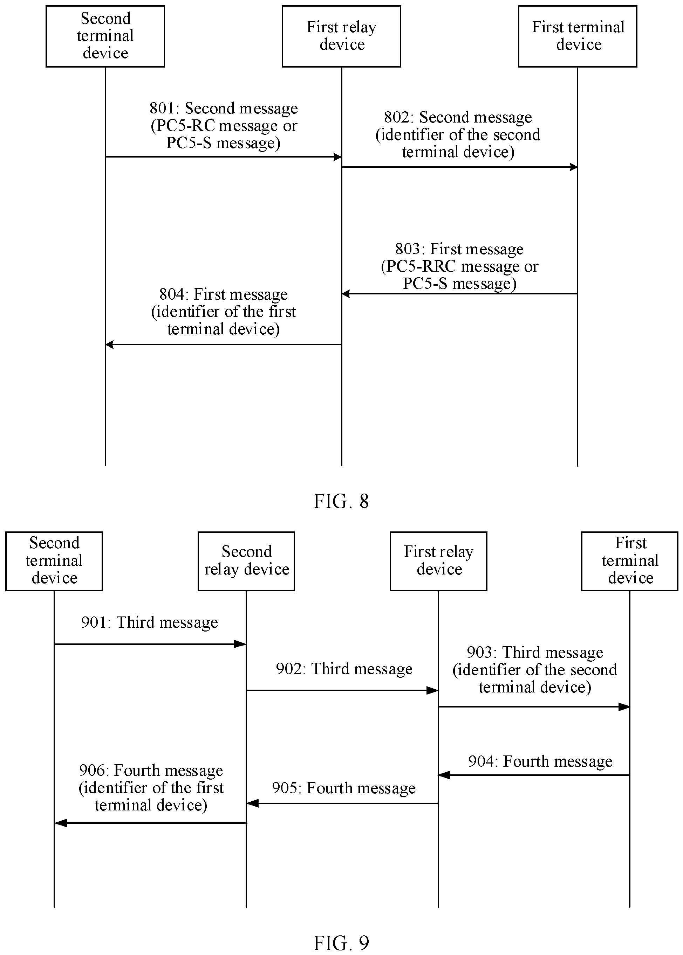

In another possible implementation, a relay device may send an identifier of a peer end to a terminal device after a U2U relay unicast connection establishment process, so that a first terminal device and a second terminal device obtain the identifier of the peer end. As shown in FIG. 8, the following steps are included.

Step 801: The second terminal device sends a second message to a first relay device.

Step 802: The first relay device forwards the second message to the first terminal device.

The second message may be a PC5-RRC message or a PC5-S message. The second message may include a layer 2 identifier (L2 ID2) of the second terminal device (UE2), and may further include an adaptation layer identifier (adaption layer ID) corresponding to the second terminal device.

Step 803: The first terminal device sends a first message to the first relay device.

Step 804: The first relay device forwards the first message to the second terminal device.

The first message may be a PC5-RRC message or a PC5-S message. The first message may include a layer 2 identifier (for example, L2 ID 1) of the first terminal device, and may further include an adaptation layer identifier corresponding to the first terminal device.

It should be noted that there is no sequence between step 801 and step 803. For example, step 801 and step 802 may be performed before step 803 and step 804. Alternatively, step 803 and step 804 may be performed before step 801 and step 802. The second terminal device may send the second message before the first terminal device sends the first message. Alternatively, the first terminal device may send the first message before the second terminal device sends the second message. This is not limited herein.

### Example 4

Considering a multi-hop scenario in U2U relay, an embodiment of this application provides a communication method. As shown in FIG. 9, two hops are used as an example for description. A relay device may include a first relay device and a second relay device. The first relay device and the second relay device jointly provide relay services for a second terminal device and a first terminal device. The first relay device establishes a communication link of a unicast connection to the first terminal device, and the second relay device establishes a communication link of a unicast connection to the second terminal device. Data forwarding may be performed between the first relay device and the second relay device, to implement multi-hop. For another multi-hop scenario, refer to this embodiment. Details are not described herein again. Specifically, the following steps may be included.

Step 901: The second terminal device sends a third message to the second relay device.

The third message may be a PC5-RRC message or a PC5-S message.

In a possible implementation, the third message may include an identifier of the second terminal device.

In another possible implementation, the third message does not include the identifier of the second terminal device, but carries the identifier of the second terminal device by using a MAC layer or an adaptation layer of the third message.

Step 902: The second relay device forwards the third message to the first relay device.

In a possible implementation, the third message forwarded to the first relay device may include the identifier of the second terminal device.

In another possible implementation, the third message forwarded to the first relay device does not include the identifier of the second terminal device, but carries the identifier of the second terminal device by using the MAC layer or the adaptation layer of the third message.

Step 903: The first relay device forwards the third message to the first terminal device.

In a possible implementation, the third message includes the identifier of the second terminal device. The identifier of the second terminal device may be a layer 2 identifier of the second terminal device (UE2) or an adaptation layer identifier of UE2.

Step 904: The first terminal device sends a fourth message to the first relay device.

The fourth message may be a PC5-RRC message or a PC5-S message.

In a possible implementation, the fourth message may include an identifier of the first terminal device.

In another possible implementation, the fourth message does not include the identifier of the first terminal device, but carries the identifier of the first terminal device by using a MAC layer or an adaptation layer of the fourth message.

Step 905: The first relay device forwards the fourth message to the second relay device.

In a possible implementation, the fourth message forwarded to the second relay device may further include the identifier of the first terminal device.

In another possible implementation, the fourth message does not include the identifier of the first terminal device. Instead, the identifier of the first terminal device is carried by using the MAC layer or the adaptation layer of the fourth message.

Step 906: The second relay device forwards the fourth message to the second terminal device.

In a possible implementation, the fourth message includes the identifier of the first terminal device. The identifier of the first terminal device may be a layer 2 identifier of the first terminal device (UE1) or an adaptation layer identifier of UE1.

It should be noted that there is no sequence between step 901 to step 903 and step 904 to step 906. The second terminal device may send the third message before the first terminal device sends the fourth message. Alternatively, the first terminal device may send the fourth message before the second terminal device sends the third message. This is not limited herein.

An end-to-end L2 ID is obtained during a U2U relay unicast connection establishment process, and protocol layers of UE1 and UE2 maintains an L2 ID mapping relationship. In this way, a bearer model can be properly maintained, and normal communication of U2U relay can be ensured.

When a second terminal device communicates with a plurality of terminal devices through one relay device, a unicast connection established between the second terminal device and the relay device is used to indicate to establish a unicast connection between the relay device and a new destination terminal device, so that a quantity of required unicast connections can be reduced, and resource overheads can be reduced. With reference to FIG. 1c, the second terminal device establishes a unicast connection to the first terminal device through the first relay device. For example, the second terminal device 102 may be UE2, and the first terminal device 101 may include N third terminal devices. For example, N is 3, and the third terminal device may be one of UE1, UE3, and UE4. UE2 sends data to UE1 through the relay device. For example, the first terminal device is UE1. UE2 establishes a unicast connection through the relay device to perform U2U relay communication with UE1. An L2 ID used by UE2 is L2 ID 2, an L2 ID used by UE1 is L2 ID 1, and L2 IDs used for allocation by the relay device are L2 ID a (used for communication between the relay device and UE1) and L2 ID b (used for communication between the relay device and UE2).

In this case, UE2 may initiate establishment of a connection to a new destination terminal device (for example, a fourth terminal device UE3) by using a unicast connection corresponding to a same relay device, so that UE2 simultaneously communicates with a plurality of destination terminal devices by using the unicast connection corresponding to the same relay device.

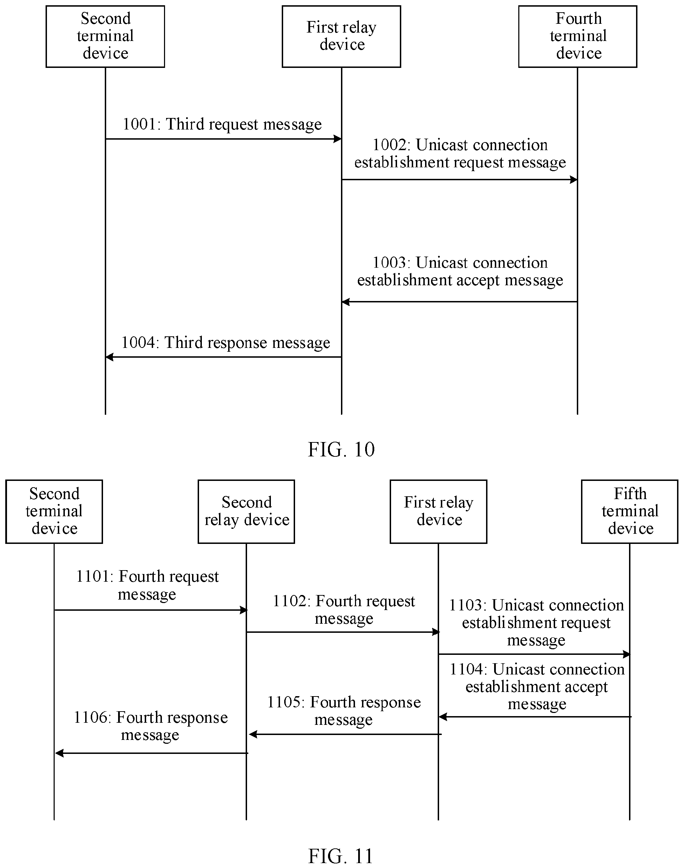

With reference to the communication method in FIG. 5, as shown in FIG. 10, an embodiment of this application further provides another communication method. When a second terminal device has obtained an identifier of a first terminal device, based on a second communication link between UE2 and a first relay device, the first relay device is requested to establish a unicast connection to a fourth terminal device. A specific procedure is shown in FIG. 10, and includes the following steps.

Step 1001: The second terminal device sends a third request message to the first relay device.

The third request message requests the first relay device to establish the unicast connection to the fourth terminal device, and the fourth terminal device may be one of third terminal devices that have not established a communication connection to the second terminal device. For example, the third request message indicates the relay device to establish a corresponding unicast connection to UE3.

In a possible implementation, the third request message is a PC5-RRC message, and the PC5-RRC message is a PCS RRC message of a unicast connection between the second terminal device and the first relay device.

Optionally, the third request message may alternatively be sent by a PCS-S layer under an indication of a PC5-RRC layer of the second terminal device.

In a possible implementation, the third request message includes one or more of the following: an application layer identifier (APP layer ID) of UE2, an application layer identifier of UE3, V2X service information (for example, an identifier of an interested V2X service), security information (for example, a security capability), and a destination layer 2 identifier (destination L2 ID) corresponding to UE3. The first relay device is enabled to trigger establishment of the unicast connection between the first relay device and the fourth terminal device based on the third request message.

Step 1002: The first relay device sends, to the fourth terminal device, the unicast connection establishment request message for the fourth terminal device.

Optionally, a PC5-RRC layer of the first relay device indicates a PCS-S layer to send the unicast connection establishment request message.

Step 1003: The fourth terminal device sends a unicast connection establishment accept message to the first relay device.

Step 1004: The second terminal device receives a third response message sent by the first relay device.

The third response message instructs the first relay device to complete establishment of the unicast connection to the fourth terminal device.

In a possible implementation, the third response message may be a PC5-RRC message, and the PCS-RRC message is a PC5-RRC message of a unicast connection established between the first terminal device and the relay device. Optionally, the PCS-S layer of the first relay device indicates the PC5-RRC layer to send the third response message

Considering a multi-hop scenario in U2U relay, a unicast connection established between UE2 and a relay device is used to indicate to establish a unicast connection between the relay device and a new destination terminal device, so that a quantity of required unicast connections can be reduced, and resource overheads can be reduced. With reference to the communication method in FIG. 5, an embodiment of this application further provides a communication method. As shown in FIG. 11, two hops are used as an example for description. A relay device may include a first relay device and a second relay device. The first relay device and the second relay device jointly provide relay services for a second terminal device and a first terminal device. The first relay device establishes a communication link of a unicast connection to the first terminal device, and the second relay device establishes a communication link of a unicast connection to the second terminal device. Data forwarding may be performed between the first relay device and the second relay device, to implement multi-hop. When the second terminal device has obtained an identifier of the first terminal device, the second terminal device requests, based on communication links among UE2, the first relay device, and the second relay device, the first relay device and the second relay device to establish unicast connections to a fifth terminal device. For another multi-hop scenario, refer to this embodiment. Details are not described herein again. Specifically, the following steps may be included.

Step 1101: The second terminal device sends a fourth request message to the second relay device.

The fourth request message requests the second relay device to establish the unicast connection to the fifth terminal device, and the fifth terminal device may be one of third terminal devices that have not established a communication connection to the second terminal device. For example, the fifth terminal device may be UE4. The fourth request message indicates the first relay device and the second relay device to establish corresponding unicast connections to UE4.

In a possible implementation, the fourth request message is a PC5-RRC message. Optionally, the PCS-RRC may be sent by a PC5-RRC layer under an indication of a PCS-S layer of the second terminal device.

In a possible implementation, the fourth request message includes at least one of the following: an application identifier of the second terminal device (for example, an application layer identifier of UE2), an application layer identifier of the fifth terminal device (for example, an application layer identifier of UE4), a service identifier, security capability information, and an identifier of the fifth terminal device (for example, an identifier of UE4).

In a possible implementation, the identifier of the fifth terminal device may be a layer 2 identifier of the fifth terminal device, an adaptation layer identifier of the fifth terminal device, or an identifier allocated by the first relay device to the fifth terminal device.

Step 1102: The second relay device forwards the fourth request message to the first relay device.

In a possible implementation, the fourth request message is a PC5-RRC message. Optionally, the PCS-RRC may be sent by a PC5-RRC layer under an indication of a PCS-S layer of the first relay device.

Step 1103: The first relay device sends a unicast connection establishment request message to the fifth terminal device.

Step 1104: The fifth terminal device sends a unicast connection establishment accept message to the first relay device.

Step 1105: The first relay device sends a fourth response message to the second relay device.

For example, the first relay device sends the unicast connection establishment accept message to the second relay device.

Step 1106: The second relay device forwards the fourth response message to the second terminal device.

The fourth response message instructs the second relay device to complete establishment of the unicast connection to the fifth terminal device.

In a possible implementation, the fourth response message may be a PC5-RRC message. Optionally, the fourth response message is generated by the PC5-RRC layer under an indication of the PCS-S layer of the first relay device.

With reference to FIG. 3, a scenario in which UE2 communicates with a plurality of UEs (for example, UE1, UE3, and UE4) through a same relay device is considered. UE2 performs U2U relay communication with the plurality of destination terminal devices (UE1, UE3, and UE4) through the same relay device. In this case, one unicast connection between UE2 and the relay device is associated with a plurality of unicast connections between the relay device and UE1, between the relay device and UE3, and between the relay device and UE4.

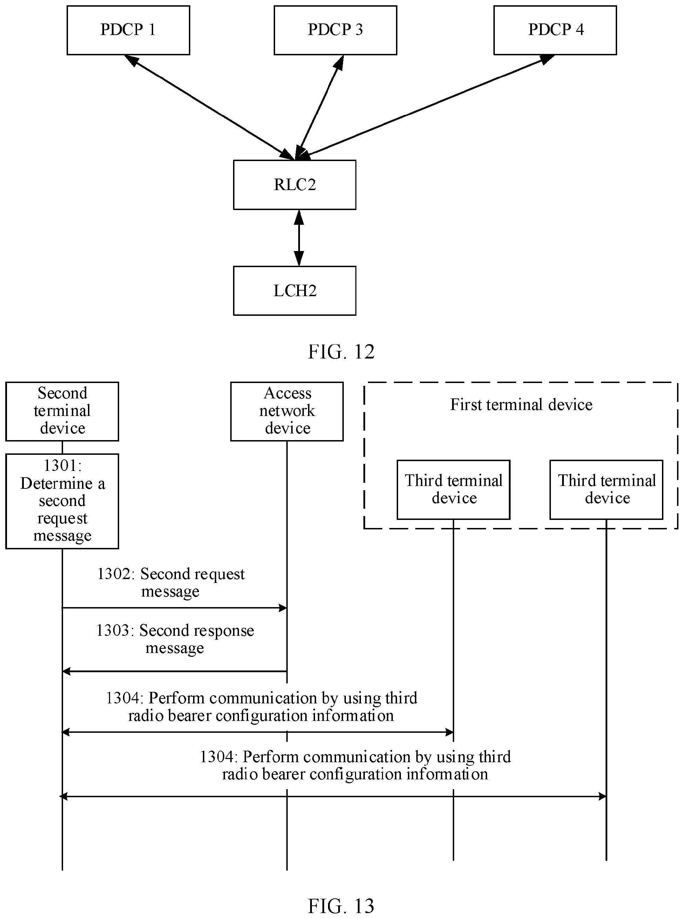

UE2 communicates with UE1, UE3, and UE4 through a relay device corresponding to a same unicast connection, and a PDCP entity is end-to-end corresponding (corresponding to a source terminal device and a destination terminal device). Therefore, PDCP entities for different UE1, UE3, and UE4 are different, and configurations of these PDCP entities may be different. For example, UE2 has different QoS requirements when communicating with UE1, UE3, and UE4. Therefore, different PDCP entities need to be configured for respective communication links. As shown in FIG. 12, QoS used when UE2 communicates with UE1 is QoS 1, and a PDCP entity that may be correspondingly configured is a PDCP 1; QoS used when UE2 communicates with UE3 is QoS2, and a PDCP entity that may be correspondingly configured is a PDCP 2; and QoS used when UE4 communicates with UE2 is QoS3, and a PDCP entity that may be correspondingly configured is a PDCP 3.

In addition, an RLC entity may be shared by different destination terminal devices. For example, UE1, UE3, and UE4 share one RLC entity. To be specific, UE2 communicates with UE1 through the first relay device, a used RLC entity is RLC2, and the RLC2 entity is associated with an identifier of UE2 and a second identifier of the first relay device. UE3 communicates with UE2 through the first relay device. A used RLC entity may also be RLC2, and an association relationship stored by the RLC2 entity is still the identifier of UE2 and the second identifier of the first relay device. UE2 communicates with UE4 through the first relay device. A used RLC entity may also be RLC2, and RLC2 is associated with the identifier of UE2 and the second identifier of the first relay device. PDCP entities corresponding to different destination terminal devices are associated with different identifiers (the identifier of UE2 and an identifier of a corresponding destination terminal device). Therefore, a same RLC entity may be associated with a plurality of PDCP entities (respectively corresponding to different destination terminal devices, for example, UE1, UE3, and UE4). These PDCP entities may be corresponding to different QoS requirements. Therefore, QoS of the plurality of UEs needs to be comprehensively considered to configure a proper RLC entity.

With reference to the scenario in FIG. 12, considering that the second terminal device may fail to obtain end-to-end identifiers of a plurality of destination terminal devices, the second terminal device can only perceive the relay device. As a result, a network in which the terminal device is located can allocate only sidelink data radio bearer configurations with same performance to the destination terminal devices, but cannot allocate different configurations to the different destination terminal devices. As a result, transmission quality of unicast data corresponding to the different destination terminal devices is poor. To implement more proper SLRB configurations for the plurality of destination terminal devices, as shown in FIG. 13, an embodiment of this application further provides a communication method. An example in which a source terminal device is a second terminal device and a destination terminal device is a first terminal device is used below for description. The second terminal device requests an access network device to configure proper SLRB configurations for a plurality of destination terminal devices. The first terminal device may include N third terminal devices. With reference to FIG. 3, the second terminal device may be UE2, and the third terminal devices may be UE1, UE3, and UE4. Specifically, the following steps may be included.

Step 1301: The second terminal device determines a second request message.

The second request message may carry QoS information corresponding to the plurality of destination terminal devices (where for example, the second request message carries QoS information corresponding to UE1 and QoS information corresponding to UE3). Therefore, after receiving the second request message, the access network device may configure SLRBs for the plurality of destination terminal devices based on the QoS information corresponding to the plurality of destination terminal devices.

In a possible implementation, the second request message may request to configure an SLRB configuration for the first terminal device.

For example, the first terminal device is a terminal device. The second request message may include first QoS information, a second identifier of a first relay device, and first information.

The first QoS information is QoS information corresponding to the first terminal device. The second identifier of the first relay device identifies a second communication link between the second terminal device and the first relay device. There is a correspondence between the first information and the first QoS information, and there is a correspondence between the first information and the second identifier

It may be understood that the QoS information includes a QoS flow identifier (QoS flow ID) and/or a QoS profile (QoS profile).

For example, the first information may be a unique identifier of an adaptation layer of the first terminal device, may be a local identifier of the adaptation layer of the first terminal device, may be an identifier of a PCS-S layer of the first terminal device, may be an L2 ID of the first terminal device, or may be a QoS flow identifier

For example, the first terminal device includes a plurality of terminal devices. For example, the first terminal device includes N third terminal devices. In this case, the first QoS information may include M pieces of second QoS information. The second QoS information is QoS information corresponding to the third terminal device. In this case, the first information may include N pieces of second information, where N is a positive integer, and M is a positive integer greater than or equal to N. There is a correspondence between the second information and the second QoS information. A correspondence among the second information, the second identifier, and the second QoS information may be shown in Table 2.

Table 2 is used as an example. The first information of UE1 may be a unique identifier adaption ID1 of an adaptation layer of UE1, the first information of UE3 may be a unique identifier adaption ID3 of an adaptation layer of UE3, and the first information of UE4 may be a unique identifier adaption ID4 of an adaptation layer of UE4. Therefore, the access network device may determine, based on the first QoS information and the first information, that the first QoS information is used to configure an SLRB for the second terminal device to communicate with the first terminal device through the first relay device. It should be noted that the first information may be information indicated by an upper layer (a V2X layer or a PC5-S layer) to an AS layer, or may be determined by the AS layer. This is not limited herein.

**Table 2**

| Second identifier of the relay device | First QoS information | First information |
|---|---|---|
| R1-L2-ID-b | QoS1 | Adaption ID1 |
| R1-L2-ID-b | QoS2 | Adaption ID3 |
| R1-L2-ID-b | QoS3 | Adaption ID4 |

Step 1302: The second terminal device sends a second request message to the access network device.

It is considered that when UE1 is in an RRC connected mode, the second request message may be an SUI message. Therefore, QoS information corresponding to each destination terminal device is reported to the access network device by using the SUI message. Therefore, the access network device can distinguish the QoS information for the different destination terminal devices (used to indicate whether the QoS information is for UE1, UE3, or UE4).

Step 1303: The second terminal device receives a second response message from the access network device.

The second response message includes radio bearer configuration information corresponding to the first terminal device.

Considering a scenario in which the first terminal device is one terminal device, the second response message may include radio bearer configuration information corresponding to the first terminal device. Considering a scenario in which the first terminal device includes N terminal devices, the radio bearer configuration information in the second response message may include X pieces of third radio bearer configuration information, where X is a positive integer less than or equal to M. That is, the access network device may configure M pieces of third radio bearer configuration information for the N third terminal devices.

For example, the third terminal device is UE1, and the third radio bearer configuration information of UE1 may include PDCP configuration information and/or SDAP configuration information of UE1, where the third radio bearer configuration information is associated with the QoS information of UE1. That is, the third radio bearer configuration information is determined based on the QoS information of UE1. The third radio bearer configuration information of UE1 may further include or be associated with RLC bearer configuration information shared by the N third terminal devices. The RLC bearer configuration information is determined by the access network device based on X pieces of QoS information corresponding to the N third terminal devices. The RLC bearer configuration information is associated with the second identifier of the first relay device.

For example, the third terminal device is UE3, and the third radio bearer configuration information of UE3 may include PDCP configuration information and/or SDAP configuration information of UE3, where the third radio bearer configuration information is associated with the QoS information of UE3. That is, the third radio bearer configuration information is determined based on the QoS information of UE3. The third radio bearer configuration information of UE3 may further include or be associated with RLC bearer configuration information shared by the N third terminal devices. The RLC bearer configuration information is determined by the access network device based on X pieces of QoS information corresponding to the N third terminal devices. The RLC bearer configuration information is associated with the second identifier of the first relay device.

In a possible implementation, the access network device sends the X third radio bearers by using one second response message. In another possible implementation, the access network device may alternatively include the X pieces of third radio bearer configuration information in a plurality of second response messages, to indicate corresponding third radio bearers to the N third terminal devices. This is not limited herein.

Step 1304: The second terminal device communicates with the first terminal device through the first relay device on a radio bearer corresponding to the first terminal device.

Considering a scenario in which the first terminal device is one terminal device, the second terminal device may communicate with the first terminal device on the radio bearer corresponding to the first terminal device. Considering a scenario in which the first terminal device is N terminal devices, the second terminal device may communicate with a corresponding third terminal device through the first relay device on a corresponding third radio bearer.

Manner c1 to Manner c3 are used as examples below to describe implementations of the second request message and the second response message in different scenarios.

Manner c1: When the second terminal device performs relay communication with the first terminal device through the first relay device, the first QoS information may further include a first QoS identifier.

The first QoS identifier indicates a QoS flow inside the third terminal device, and the first QoS identifier is not corresponding to the first information.

For example, the first QoS identifier may be a QoS flow identifier, and the QoS flow identifier may distinguish a different QoS flow inside each third terminal device. In this case, the QoS flow identifier of each third terminal device may not be corresponding to a layer 2 identifier of the third terminal device and a communication type (cast type) of the third terminal device. That is, different third terminal devices may be corresponding to a same QoS flow identifier. To be specific, the first QoS identifier of UE1 is a QoS flow identifier 1, the first QoS identifier of UE3 is the QoS flow identifier 1, and the first QoS identifier of UE4 is the QoS flow identifier 1. A correspondence may be shown in Table 3.

**Table 3**

| Second identifier of the relay device | First QoS identifier | First information |
|---|---|---|
| R1-L2-ID-b | QoS flow identifier 1 (corresponding to UE1) | Adaption ID1 |
| R1-L2-ID-b | QoS flow identifier 1 (corresponding to UE3) | Adaption ID3 |
| R1-L2-ID-b | QoS flow identifier 1 (corresponding to UE4) | Adaption ID4 |

Therefore, the second response message sent by the access network device to the second terminal device further needs to include the first QoS identifier and the first information, to indicate an allocated third terminal device corresponding to an SLRB configuration in the second response message. A correspondence may be shown in Table 4.

**Table 4**

| Second identifier of the relay device | SLRB configuration information | First QoS identifier | First information |
|---|---|---|---|
| R 1-L2-ID-b | SLRB1 | QoS flow identifier 1 (corresponding to UE1) | Adaption ID1 |
| R1-L2-ID-b | SLRB2 | QoS flow identifier 1 (corresponding to UE3) | Adaption ID3 |
| R1-L2-ID-b | SLRB3 | QoS flow identifier 1 (corresponding to UE4) | Adaption ID4 |

Manner c2: The first QoS information further includes a first QoS identifier. In this case, the first QoS identifier is corresponding to the first information.

In this manner, the first QoS identifier may alternatively be a QoS flow identifier, and the QoS flow identifier may distinguish each third terminal device and corresponding QoS information. For example, after determining the QoS information of each third terminal device, the second terminal device may establish a QoS flow identifier for the third terminal device. In this case, the QoS flow identifier of each third terminal device may be corresponding to a layer 2 identifier of the third terminal device, a communication type (cast type) of the third terminal device, and the QoS information. To be specific, the first QoS identifier of UE1 is a QoS flow identifier 1, the first QoS identifier of UE3 is a QoS flow identifier 3, and the first QoS identifier of UE4 is a QoS flow identifier 4. A correspondence may be shown in Table 5.

**Table 5**

| Second identifier of the relay device | First QoS identifier |
|---|---|
| R1-L2-ID-b | QoS flow identifier 1 (corresponding to UE1) |
| R1-L2-ID-b | QoS flow identifier 3 (corresponding to UE3) |
| R1-L2-ID-b | QoS flow identifier 4 (corresponding to UE4) |

Therefore, the second response message sent by the access network device to the second terminal device may carry only the first QoS identifier, that is, may indicate an allocated third terminal device corresponding to an SLRB configuration in the second response message. A correspondence may be shown in Table 6.

**Table 6**

| Second identifier of the relay device | SLRB configuration information | First QoS identifier |
|---|---|---|
| R 1-L2-ID-b | SLRB1 | QoS flow identifier 1 (corresponding to UE1) |
| R1-L2-ID-b | SLRB2 | QoS flow identifier 3 (corresponding to UE3) |
| R1-L2-ID-b | SLRB3 | QoS flow identifier 4 (corresponding to UE4) |

Manner c3: The radio bearer configuration information that is corresponding to the first terminal device and that is sent by the access network device to the second terminal device may carry or be associated with RLC configuration information, and the RLC configuration information is associated with a plurality of pieces of PDCP entity configuration information. For example, an RLC bearer configuration includes a PDCP entity configuration index list SLRB-Uu-configindex-list. A correspondence may be shown in Table 7.

**Table 7**

| Second identifier of the relay device | RLC configuration information | SLRB configuration information |
|---|---|---|
| R1-L2-ID-b | RLC1 | SLRB1 |
| R 1-L2-ID-b | | SLRB2 |
| R 1-L2-ID-b | | SLRB3 |

Further, in a possible scenario, to distinguish a scenario with relay communication and a scenario without relay communication, corresponding characters may be set for the first information, to distinguish relay communication or direct communication between the second terminal device and the first terminal device.

For example, when the first information is 0, it may indicate that direct communication is performed between the second terminal device and the first terminal device. This is used to indicate the QoS information corresponding to the first information, or direct communication is performed between the first terminal device corresponding to the first information and the second terminal device, and the first terminal device and the second terminal device do not need to establish a U2U relay communication link by using the relay device. When the first information is a non-zero value, it may indicate relay communication between the second terminal device and the first terminal device.

In another possible scenario, considering that when the second terminal device is not in an RRC connected mode, the second terminal device cannot request an SLRB configuration of the first terminal device from the access network device. In this case, the second terminal device may determine the SLRB configuration for the first terminal device based on setting of the second terminal device. For example, when a configuration of a PDCP entity is determined, only QoS of one corresponding destination terminal device may be considered. That is, a PDCP entity is configured for each third terminal device. For example, when it is determined that destination terminal devices shared on a unicast connection between the current second terminal device and the first relay device include UE1, UE3, and UE4, a PDCP 1 corresponding to UE1 may be determined based on QoS1 corresponding to UE1; a PDCP 3 corresponding to UE3 may be determined based on QoS3 corresponding to UE3; and a PDCP 4 corresponding to UE4 may be determined based on QoS4 corresponding to UE4.

When the configuration of the RLC entity is determined, the RLC configuration may be jointly determined based on QoS of a plurality of destination terminal devices shared on the unicast connection between the current second terminal device and the first relay device. For example, it is determined that the destination terminal devices shared on the current unicast connection between the second terminal device and the first relay device include UE1, UE3, and UE4. In this case, the RLC configuration may be jointly determined based on QoS1 corresponding to UE1, QoS2 corresponding to UE3, and QoS3 corresponding to UE4.

According to the foregoing method, when the second terminal device communicates with the plurality of destination terminal devices through one relay device, the second terminal device may report first information, so that the access network device distinguishes QoS information of different destination terminal devices under a same relay device L2 ID. In this way, proper SLRB configurations (a PDCP configuration, an RLC bearer configuration, and the like) are obtained, to better and more accurately ensure QoS of U2U relay communication, and improve performance of communication between the second terminal device and the destination terminal devices.

With reference to the accompanying drawings, the following describes apparatuses configured to implement the foregoing methods in embodiments of this application. Therefore, all the foregoing content may be used in the following embodiments. Repeated content is not described again.

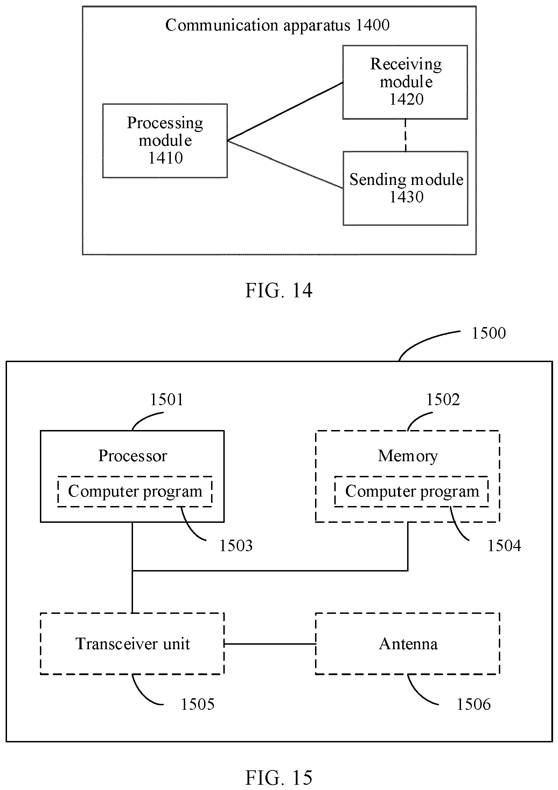

FIG. 14 is a schematic block diagram of a communication apparatus 1400 according to an embodiment of this application.

The communication apparatus 1400 includes a processing module 1410 and a receiving module 1420. Optionally, the communication apparatus 1400 may further include a sending module 1430. For example, the communication apparatus 1400 may be a transmit end device, or may be a receive end device. For example, the communication apparatus 1400 may be a second communication apparatus. The second communication apparatus may be a second terminal device, may be a first terminal device, or may be a chip used in the second terminal device or the first terminal device or another combined component or part that has a function of the foregoing terminal device. When the communication apparatus 1400 is the terminal device, the receiving module 1420 or the sending module 1430 may be a transceiver, where the transceiver may include an antenna, a radio frequency circuit, and the like; and the processing module 1410 may be a processor, for example, a baseband processor, where the baseband processor may include one or more CPUs. When the communication apparatus 1400 is the part that has the function of the terminal device, the receiving module 1420 or the sending module 1430 may be a radio frequency unit, and the processing module 1410 may be a processor, for example, a baseband processor. When the communication apparatus 1400 is a chip system, the receiving module 1420 or the sending module 1430 may be an input/output interface of a chip (for example, a baseband chip), and the processing module 1410 may be a processor of the chip system, and may include one or more central processing units. It should be understood that the processing module 1410 in this embodiment of this application may be implemented by a processor or a processor-related circuit component, and the receiving module 1420 or the sending module 1430 may be implemented by a transceiver or a transceiver-related circuit component.

For example, the processing module 1410 may be configured to perform all operations, for example, step 502a or step 502b, that are performed by the terminal device in the embodiments shown in FIG. 5 to FIG. 13 except sending and receiving operations, and/or configured to support another process of the technology described in this specification. The receiving module 1420 and the sending module 1430 may be configured to perform all receiving and sending operations performed by the terminal device in the embodiments shown in FIG. 5 to FIG. 13, and/or configured to support another process of the technology described in this specification.

The receiving module 1420 and the sending module 1430 may be one functional module. The functional module can implement both a sending operation and a receiving operation. For example, the receiving module 1420 and the sending module 1430 may be configured to perform all sending operations and receiving operations performed by the terminal device in the embodiments shown in FIG. 5 to FIG. 13. For example, when a sending operation is performed, it may be considered that the module is the sending module 1430. When a receiving operation is performed, it may be considered that the module is the receiving module 1430. Alternatively, the receiving module 1420 and the sending module 1430 may alternatively be two functional modules. The sending module 1430 is configured to implement a sending operation. For example, the sending module may be configured to perform all sending operations performed by the terminal device in any one of the embodiments shown in FIG. 5 to FIG. 13. The receiving module 1420 is configured to implement a receiving operation. For example, the receiving module 1420 may be configured to perform all receiving operations performed by the terminal device in the embodiments shown in FIG. 5 to FIG. 13.

In a possible embodiment, the receiving module 1420 is configured to receive a first message from a first relay device. The first message includes an identifier of a first terminal device, and the identifier of the first terminal device is a layer 2 identifier of the first terminal device, an adaptation layer identifier of the first terminal device, or an identifier allocated by the first relay device to the first terminal device.

The processing module 1410 is configured to communicate with the first terminal device based on the identifier of the first terminal device.

In a possible implementation, the sending module 1430 is configured to send a second message to the first relay device. The second message includes an identifier of a second terminal device. The identifier of the second terminal device is a layer 2 identifier of the second terminal device, an adaptation layer identifier of the second terminal device, or an identifier allocated by the first relay device to the second terminal device.

In a possible implementation, the first message or the second message is any one of the following: a unicast connection establishment request message, a unicast connection establishment accept message, a security mode activation command message, a security mode activation complete message, a PC5-RRC message, or a PC5-S message

Scenario 1: The communication apparatus 1400 is a transmit end device.

In a possible implementation, the receiving module 1420 is configured to obtain first data by using a first protocol layer. The first data is data sent by the second terminal device to the first terminal device through the first relay device, and the first data is associated with the identifier of the second terminal device and the identifier of the first terminal device.

Optionally, the processing module 1410 is configured to determine, by using the first protocol layer, second data based on the first data. The second data is data sent by the second terminal device to the first terminal device through the first relay device, and the second data is associated with the identifier of the second terminal device and a second identifier of the first relay device.

Optionally, the first protocol layer is a packet data convergence protocol PDCP layer or an adaptation layer.

Scenario 2: The communication apparatus 1400 is a receive end device.

In a possible implementation, the receiving module 1420 is configured to obtain third data by using a second protocol layer. The third data is data received by the second terminal device from the first terminal device through the first relay device, and the third data is associated with a first identifier of the first relay device and the identifier of the second terminal device.

Optionally, the processing module 1410 is configured to determine fourth data based on the third data by using the second protocol layer. The fourth data is data received by the second terminal device from the first terminal device through the first relay device, and the fourth data is associated with the identifier of the first terminal device and the identifier of the second terminal device.

Optionally, the second protocol layer is a radio link control RLC layer or an adaptation layer.

In a possible implementation, the sending module 1430 is configured to send a first request message to an access network device. The first request message requests first radio bearer configuration information corresponding to the first terminal device, the first request message includes first QoS information and the identifier of the first terminal device, and the first QoS information is QoS information corresponding to the first terminal device.

In a possible implementation, the receiving module 1420 is further configured to receive first configuration information from the access network device. The first configuration information is the first radio bearer configuration information corresponding to the first terminal device, and a first radio bearer is used by the second terminal device to send data to the first terminal device.

In another possible embodiment, the processing module 1410 is configured to determine a second request message. The sending module 1430 is configured to send the second request message to an access network device. The second request message includes first QoS information, a second identifier of a first relay device, and first information. The first QoS information is QoS information corresponding to a first terminal device, the second identifier of the first relay device is used by a second terminal device to communicate with the first relay device, there is a correspondence between the first information and the first QoS information, and there is a correspondence between the first information and the second identifier.

In a possible implementation, the first terminal device includes N third terminal devices, the first QoS information includes M pieces of second QoS information, and the first information includes N pieces of second information, where N is a positive integer, and M is a positive integer greater than or equal to N. The second QoS information is QoS information corresponding to the third terminal device, and there is a correspondence between the second information and the second QoS information.

In a possible implementation, the receiving module 1420 is further configured to receive a second response message from the access network device. The second response message includes radio bearer configuration information corresponding to the first terminal device.

The processing module 1410 is configured to communicate with the first terminal device through the first relay device on a radio bearer corresponding to the first terminal device.

In a possible implementation, the radio bearer configuration information corresponding to the first terminal device includes X pieces of third radio bearer configuration information, where X is a positive integer less than or equal to N.

The processing module 1410 is configured to communicate with a corresponding third terminal device through the first relay device on a third radio bearer.

In a possible implementation, the first QoS information includes a first QoS identifier, and the first QoS identifier is not corresponding to the first information. The second response message further includes the first QoS identifier and the first information.

In a possible implementation, the first QoS information includes a first QoS identifier, and the first QoS identifier is corresponding to the first information. The second response message further includes the first QoS identifier

In a possible implementation, the first information is one of the following: a local identifier of an adaptation layer of the first terminal device, a unique identifier of the adaptation layer of the first terminal device, an identifier of a PC5-S layer of the first terminal device, or a layer 2 identifier of the first terminal device.

In another embodiment, the sending module 1430 is further configured to send a third request message to a first relay device. The third request message is a PC5-RRC message, and the third request message requests the first relay device to establish a unicast connection to a fourth terminal device. A first terminal device establishes a unicast connection to a second terminal device through the first relay device. The receiving module 1420 is further configured to receive a third response message sent by the first relay device. The third response message is a PC5-RRC message, and the third response message indicates that the first relay device completes establishment of the unicast connection to the fourth terminal device.

In a possible implementation, the receiving module 1420 is further configured to receive a fourth request message from a second relay device. The fourth request message requests the second terminal device to establish a unicast connection to a fifth terminal device through the second relay device. The fifth terminal device establishes a unicast connection to the first terminal device through the second relay device. The fourth request message is a PC5-RRC message. The sending module 1430 is further configured to send a fourth response message through the second relay device. The fourth response message indicates that the second terminal device establishes a unicast connection to the fifth terminal device through the second relay device. The fourth response message is a PC5-RRC message.

In a possible implementation, the third request message or the fourth request message includes at least one of the following: an application identifier of the second terminal device, an application layer identifier of the fifth terminal device, a service identifier, security capability information, and an identifier of the fifth terminal device.

In a possible implementation, the identifier of the fifth terminal device is a layer 2 identifier of the fifth terminal device, an adaptation layer identifier of the fifth terminal device, or an identifier allocated by the first relay device to the fifth terminal device.

In a possible implementation, the third request message is generated by a PC5-RRC layer under an indication of a PC5-S layer, and the third response message is generated by the PC5-RRC layer under an indication of the PC5-S layer. Alternatively, the fourth request message is generated by the PC5-RRC layer under an indication of the PC5-S layer, and the third response message is generated by the PC5-RRC layer under an indication of the PC5-S layer.

In another embodiment, the receiving module 1420 is further configured to receive a third request message from a first terminal device by using a first radio bearer. The third request message requests a first relay device to establish a unicast connection to a fourth terminal device, the first radio bearer is a radio bearer between the first terminal device and a second terminal device, and the third request message is a PC5-RRC message. The sending module 1430 is further configured to send a third response message to the first terminal device on the first radio bearer. The third response message indicates that the first relay device completes establishment of the unicast connection to the fourth terminal device, and the third response message is a PC5-RRC message.

In a possible implementation, the third request message is sent by a PC5-RRC layer under an indication of a PC5-S layer, and the third response message is sent by the PC5-RRC layer under an indication of the PC5-S layer.

In a possible implementation, the third request message includes at least one of the following: an application identifier of the first terminal device, an application layer identifier of the fourth terminal device, a service identifier, security capability information, and an identifier of the fourth terminal device.

In a possible implementation, the identifier of the fourth terminal device is a layer 2 identifier of the fourth terminal device, an adaptation layer identifier of the fourth terminal device, or an identifier allocated by the first relay device to the fourth terminal device.

In another embodiment, the communication apparatus 1400 may alternatively be a first communication apparatus. For example, the communication apparatus 1400 may be a relay device, and the relay device may be a terminal device or a network device. Alternatively, the communication apparatus 1400 may be a chip used in the relay device, or another combined component, part, or the like that has a function of the foregoing relay device. When the communication apparatus 1400 is a relay device, the receiving module 1420 or the sending module 1430 may be a transceiver, where the transceiver may include an antenna, a radio frequency circuit, and the like; and the processing module 1410 may be a processor, for example, a baseband processor, where the baseband processor may include one or more CPUs. When the communication apparatus 1400 is the part that has the function of the relay device, the receiving module 1420 or the sending module 1430 may be a radio frequency unit, and the processing module 1410 may be a processor, for example, a baseband processor.

For example, the processing module 1410 may be configured to perform all operations that are performed by the first relay device in the embodiments shown in FIG. 5 to FIG. 13 except sending and receiving operations, and/or configured to support another process of the technology described in this specification. The receiving module 1420 and the sending module 1430 may be configured to perform all receiving and sending operations performed by the first relay device in the embodiments shown in FIG. 5 to FIG. 13, and/or configured to support another process of the technology described in this specification.

The receiving module 1420 and the sending module 1430 may be one functional module. The functional module can implement both a sending operation and a receiving operation. For example, the receiving module 1420 and the sending module 1430 may be configured to perform all sending operations and receiving operations performed by the first relay device in the embodiments shown in FIG. 5 to FIG. 13. For example, when a sending operation is performed, it may be considered that the module is the sending module 1430. When a receiving operation is performed, it may be considered that the module is the receiving module 1430. Alternatively, the receiving module 1420 and the sending module 1430 may alternatively be two functional modules. The sending module 1430 is configured to implement a sending operation. For example, the sending module may be configured to perform all sending operations performed by the first relay device in any one of the embodiments shown in FIG. 5 to FIG. 13. The receiving module 1420 is configured to implement a receiving operation. For example, the receiving module 1420 may be configured to perform all receiving operations performed by the first relay device in the embodiments shown in FIG. 5 to FIG. 13. An example in which the communication apparatus 1400 is a first relay device is used below for description.

The processing module 1410 is configured to send a first message to a second terminal device through the sending module 1430. The first message includes an identifier of a first terminal device, the identifier of the first terminal device is a layer 2 identifier of the first terminal device, an adaptation layer identifier of the first terminal device, or an identifier allocated by the first relay device to the first terminal device, and the identifier of the first terminal device is used by a second terminal device to communicate with the first terminal device based on the identifier of the first terminal device.

The processing module 1410 is configured to send a second message to the first terminal device through the sending module 1430. The second message includes an identifier of the second terminal device, the identifier of the second terminal device is a layer 2 identifier of the second terminal device, an adaptation layer identifier of the second terminal device, or an identifier allocated by the first relay device to the second terminal device, and the identifier of the second terminal device is used by the first terminal device to communicate with the second terminal device based on the identifier of the second terminal device.

In a possible implementation, the processing module 1410 is configured to send a third message to a second relay device through the sending module 1430. The third message includes the identifier of the first terminal device, and the second relay device provides a relay service for the second terminal device and the first terminal device.

In a possible implementation, the first message or the second message is any one of the following: a unicast connection establishment request message, a unicast connection establishment accept message, a security mode activation command message, a security mode activation complete message, a PC5-RRC message, or a PC5-S message

Based on a same concept as the foregoing communication methods, as shown in FIG. 15, an embodiment of this application further provides a communication apparatus 1500. The communication apparatus 1500 may be configured to implement the method performed by the terminal device in the foregoing method embodiments. The terminal device may be a first terminal device or may be a second terminal device. Refer to the descriptions in the foregoing method embodiments. The communication apparatus 1500 may be a terminal device, may be located in the terminal device, may be a transmit end device, or may be a receive end device.

The communication apparatus 1500 includes one or more processors 1501. The processor 1501 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a terminal device or a chip), execute a software program, and process data of the software program. The communication apparatus 1500 may include a transceiver unit, configured to input (receive) and output (send) signals. For example, the transceiver unit may be a transceiver or a radio frequency chip.

The communication apparatus 1500 includes the one or more processors 1501. The one or more processors 1501 may implement the methods performed by the terminal device in the foregoing embodiments.

Optionally, the processor 1501 may further implement another function in addition to the methods in the foregoing embodiments. Optionally, in an implementation, the processor 1501 may execute a computer program, to enable the communication apparatus 1500 to perform the methods performed by the terminal device in the foregoing method embodiments. All or a part of the computer program may be stored in the processor 1501, for example, a computer program 1503; or may be stored in a memory 1502 coupled to the processor 1501, for example, a computer program 1504. Alternatively, computer programs 1503 and 1504 may be used together to enable the communication apparatus 1500 to perform the methods performed by the terminal device in the foregoing method embodiments.

In another possible implementation, the communication apparatus 1500 may alternatively include a circuit. The circuit may implement functions performed by the terminal device in the foregoing method embodiments.

In still another possible implementation, the communication apparatus 1500 may include one or more memories 1502. The one or more memories 1502 store a computer program 1504. The computer program may be run on the processor, to enable the communication apparatus 1500 to perform the communication methods in the foregoing method embodiments. Optionally, the memory may further store data. Optionally, the processor may alternatively store a computer program and/or data. For example, the one or more memories 1502 may store an association or a correspondence in the foregoing embodiments, or a related parameter or table in the foregoing embodiments. The processor and the memory may be separately disposed, or may be integrated with or coupled to each other.

In another possible implementation, the communication apparatus 1500 may further include a transceiver unit 1505. The processor 1501 may be referred to as a processing unit, and controls the communication apparatus (for example, a terminal device). The transceiver unit 1505 may be referred to as a transceiver, a transceiver circuit, or the like, and is configured to implement receiving and sending of data or control signaling.

For example, if the communication apparatus 1500 is a chip used in a communication device or another combined component, part, or the like that has a function of the communication device, the communication apparatus 1500 may include the transceiver unit 1505.

In another possible implementation, the communication apparatus 1500 may further include a transceiver unit 1505 and an antenna 1506. The processor 1501 may be referred to as a processing unit, and controls the communication apparatus (for example, a terminal device). The transceiver unit 1505 may be referred to as a transceiver, a transceiver circuit, or the like, and is configured to implement a transceiver function of the apparatus by using the antenna 1506.

The communication apparatus 1500 in this embodiment of this application may be configured to implement the methods performed by the relay device in the foregoing method embodiments. The relay device may be a terminal device or a network device. Refer to the descriptions in the foregoing method embodiments. The communication apparatus 1500 may be a relay device, may be located in the relay device, may be a transmit end device, or may be a receive end device.

The communication apparatus 1500 includes one or more processors 1501. The processor 1501 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a relay device or a chip), execute a software program, and process data of the software program. The communication apparatus 1500 may include a transceiver unit, configured to input (receive) and output (send) signals. For example, the transceiver unit may be a transceiver or a radio frequency chip.

The communication apparatus 1500 includes the one or more processors 1501. The one or more processors 1501 may implement the methods performed by the first relay device in the foregoing embodiments.

Optionally, the processor 1501 may further implement another function in addition to the methods in the foregoing embodiments. Optionally, in an implementation, the processor 1501 may execute a computer program, to enable the communication apparatus 1500 to perform the methods performed by the first relay device in the foregoing method embodiments. All or a part of the computer program may be stored in the processor 1501, for example, a computer program 1503; or may be stored in a memory 1502 coupled to the processor 1501, for example, a computer program 1504. Alternatively, computer programs 1503 and 1504 may be used together to enable the communication apparatus 1500 to perform the methods performed by the first relay device in the foregoing method embodiments.

In still another possible implementation, the communication apparatus 1500 may alternatively include a circuit. The circuit may implement functions performed by the first relay device in the foregoing method embodiments.

In still another possible implementation, the communication apparatus 1500 may include one or more memories 1502. The one or more memories 1502 store a computer program 1504. The computer program may be run on the processor, to enable the communication apparatus 1500 to perform the communication methods in the foregoing method embodiments. Optionally, the memory may further store data. Optionally, the processor may alternatively store a computer program and/or data. For example, the one or more memories 1502 may store an association or a correspondence in the foregoing embodiments, or a related parameter or table in the foregoing embodiments. The processor and the memory may be separately disposed, or may be integrated with or coupled to each other.

In another possible implementation, the communication apparatus 1500 may further include a transceiver unit 1505. The processor 1501 may be referred to as a processing unit, and controls the communication apparatus (for example, the first relay device). The transceiver unit 1505 may be referred to as a transceiver, a transceiver circuit, or the like, and is configured to implement receiving and sending of data or control signaling.

For example, if the communication apparatus 1500 is a chip used in a communication device or another combined component, part, or the like that has a function of the communication device, the communication apparatus 1500 may include the transceiver unit 1505.

In another possible implementation, the communication apparatus 1500 may further include a transceiver unit 1505 and an antenna 1506. The processor 1501 may be referred to as a processing unit, and controls the communication apparatus (for example, the first relay device). The transceiver unit 1505 may be referred to as a transceiver, a transceiver circuit, or the like, and is configured to implement a transceiver function of the apparatus by using the antenna 1506.

It should be noted that the processor in embodiments of this application may be an integrated circuit chip, and has a signal processing capability. In an implementation process, steps in the foregoing method embodiments may be implemented by using an integrated logic circuit of hardware in the processor, or by using a computer program in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of the hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor

It may be understood that the memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through examples rather than limitative descriptions, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the system and method described in this specification are intended to include but not limited to these memories and any memory of another appropriate type.

An embodiment of this application further provides a computer-readable storage medium, storing a computer program. When the computer program is executed by a computer, the method applied to the first communication apparatus or the second communication apparatus in any one of the foregoing method embodiments is implemented.

An embodiment of this application further provides a computer program product. When the computer program product is executed by a computer, the method applied to the first communication apparatus or the second communication apparatus in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs. When the computer programs are loaded and executed on a computer, the procedures or functions according to embodiments of this application are all or partially generated. The computer may be a general-purpose computer, a dedicated computer, a computer network, or another programmable apparatus. The computer programs may be stored in a computer-readable storage medium or may be transmitted from a computer-readable storage medium to another computer-readable storage medium. For example, the computer programs may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

An embodiment of this application further provides a communication apparatus, including a processor and an interface. The processor is configured to perform the method applied to the relay device or the terminal device in any one of the foregoing method embodiments.

It may be understood that the foregoing processing apparatus may be a chip, and the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in a memory. The memory may be integrated into the processor, or may be located outside the processor and exist independently.

An embodiment of this application provides a communication system. The communication system may include the relay device and the terminal device in the embodiments shown in FIG. 5 to FIG. 13. The relay device is, for example, the communication apparatus 1400 in FIG. 14 or the communication apparatus 1500 in FIG. 15. The terminal device is, for example, the communication apparatus 1400 in FIG. 14 or the communication apparatus 1500 in FIG. 15.

An embodiment of this application further provides a computer-readable storage medium. The computer-readable storage medium stores a computer program. When the computer program is executed by a computer, the computer may implement a procedure related to the relay device or the terminal device in the embodiments shown in FIG. 5 to FIG. 13.

An embodiment of this application further provides a computer program product. The computer program product is configured to store a computer program. When the computer program is executed by a computer, the computer may implement a procedure related to the relay device or the terminal device in the embodiments shown in FIG. 5 to FIG. 13.

Embodiments of this application provide a communication method and an apparatus, to reduce resource overheads of a U2U relay and improve communication quality. The method and the apparatus are based on a same or similar concept of a same technology. Because a problem-resolving principle of the method is similar to that of the apparatus, mutual reference may be made to implementations of the apparatus and the method. Repeated parts are not described in detail.

In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In this application, "at least one" means one or more, and " a plurality of' means two or more. In addition, it should be understood that, in the descriptions of this application, terms such as "first", "second", and "third" are merely used for distinguishing and description, but should not be understood as an indication or implication of relative importance, or should not be understood as an indication or implication of a sequence. Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

## Claims

1. A communication method, applied to a second terminal device and comprising:
receiving a first message from a first relay device, wherein the first message comprises an identifier of a first terminal device, and the identifier of the first terminal device is a layer 2 identifier of the first terminal device, an adaptation layer identifier of the first terminal device, or an identifier allocated by the first relay device to the first terminal device; and
communicating with the first terminal device based on the identifier of the first terminal device.

2. The method according to claim 1, wherein the method further comprises:
sending a second message to the first relay device, wherein the second message comprises an identifier of the second terminal device, wherein
the identifier of the second terminal device is a layer 2 identifier of the second terminal device, an adaptation layer identifier of the second terminal device, or an identifier allocated by the first relay device to the second terminal device.

3. The method according to claim 1, wherein the first message or the second message is any one of the following:
a unicast connection establishment request message, a unicast connection establishment accept message, a security mode activation command message, a security mode activation complete message, a PC5-RRC message, or a PC5-S message.

4. The method according to any one of claims 1 to 3, wherein the method further comprises:
obtaining, by a first protocol layer, first data, wherein the first data is data sent by the second terminal device to the first terminal device through the first relay device, and the first data is associated with the identifier of the second terminal device and the identifier of the first terminal device.

5. The method according to claim 4, wherein the method further comprises:
determining, by the first protocol layer, second data based on the first data, wherein the second data is data sent by the second terminal device to the first terminal device through the first relay device, and the second data is associated with the identifier of the second terminal device and a second identifier of the first relay device.

6. The method according to claim 4 or 5, wherein the first protocol layer is a packet data convergence protocol PDCP layer or an adaptation layer.

7. The method according to any one of claims 1 to 6, wherein the method further comprises:
obtaining, by a second protocol layer, third data, wherein the third data is data received by the second terminal device from the first terminal device through the first relay device, and the third data is associated with a first identifier of the first relay device and the identifier of the second terminal device.

8. The method according to claim 7, wherein the method further comprises:
determining, by the second protocol layer, fourth data based on the third data, wherein the fourth data is data received by the second terminal device from the first terminal device through the first relay device, and the fourth data is associated with the identifier of the first terminal device and the identifier of the second terminal device.

9. The method according to claim 6 or 7, wherein the second protocol layer is:
a radio link control RLC layer or an adaptation layer

10. The method according to any one of claims 1 to 9, wherein the method further comprises:
sending a first request message to an access network device, wherein the first request message requests first radio bearer configuration information corresponding to the first terminal device, the first request message comprises first QoS information and the identifier of the first terminal device, and the first QoS information is QoS information corresponding to the first terminal device.

11. The method according to claim 10, wherein the method further comprises:
receiving first configuration information from the access network device, wherein the first configuration information is the first radio bearer configuration information corresponding to the first terminal device, and a first radio bearer is used by the second terminal device to send data to the first terminal device.

12. A communication method, applied to a second terminal device and comprising:
determining a second request message, wherein the second request message comprises first QoS information, a second identifier of a first relay device, and first information, the first QoS information is QoS information corresponding to a first terminal device, the second identifier of the first relay device is used by the second terminal device to communicate with the first relay device, there is a correspondence between the first information and the first QoS information, and there is a correspondence between the first information and the second identifier; and
sending the second request message to an access network device.

13. The method according to claim 12, wherein the first terminal device comprises N third terminal devices, the first QoS information comprises M pieces of second QoS information, and the first information comprises N pieces of second information, wherein N is a positive integer, and M is a positive integer greater than or equal to N; and
the second QoS information is QoS information corresponding to the third terminal device, and there is a correspondence between the second information and the second QoS information.

14. The method according to claim 12 or 13, wherein the method further comprises:
receiving a second response message from the access network device, wherein the second response message comprises radio bearer configuration information corresponding to the first terminal device; and
communicating with the first terminal device through the first relay device on a radio bearer corresponding to the first terminal device.

15. The method according to claim 14, wherein the method further comprises:
the radio bearer configuration information corresponding to the first terminal device comprises X pieces of third radio bearer configuration information, wherein X is a positive integer less than or equal to N; and
communicating with a corresponding third terminal device through the first relay device on a third radio bearer.

16. The method according to any one of claims 12 to 15, wherein the first QoS information comprises a first QoS identifier, and the first QoS identifier is not corresponding to the first information; and
the second response message further comprises the first QoS identifier and the first information.

17. The method according to any one of claims 12 to 15, wherein the first QoS information comprises a first QoS identifier, and the first QoS identifier is corresponding to the first information; and
the second response message further comprises the first QoS identifier.

18. The method according to any one of claims 12 to 17, wherein the first information is any one of the following:
a local identifier of an adaptation layer of the first terminal device, a unique identifier of the adaptation layer of the first terminal device, an identifier of a PC5-S layer of the first terminal device, or a layer 2 identifier of the first terminal device.

19. A communication method, comprising:
sending a first message to a second terminal device, wherein the first message comprises an identifier of a first terminal device, the identifier of the first terminal device is a layer 2 identifier of the first terminal device, an adaptation layer identifier of the first terminal device, or an identifier allocated by a first relay device to the first terminal device, and the identifier of the first terminal device is used by the second terminal device to communicate with the first terminal device based on the identifier of the first terminal device; and
sending a second message to the first terminal device, wherein the second message comprises an identifier of the second terminal device, the identifier of the second terminal device is a layer 2 identifier of the second terminal device, an adaptation layer identifier of the second terminal device, or an identifier allocated by the first relay device to the second terminal device, and the identifier of the second terminal device is used by the first terminal device to communicate with the second terminal device based on the identifier of the second terminal device.

20. The method according to claim 19, wherein the method further comprises:
sending a third message to a second relay device, wherein the third message comprises the identifier of the first terminal device, and the second relay device provides a relay service for the second terminal device and the first terminal device; or
sending a fourth message to a second relay device, wherein the fourth message comprises the identifier of the second terminal device.

21. The method according to claim 19 or 20, wherein the first message or the second message is any one of the following:
a unicast connection establishment request message, a unicast connection establishment accept message, a security mode activation command message, a security mode activation complete message, a PC5-RRC message, or a PC5-S message.

22. A communication apparatus, applied to a second terminal device and comprising:
a receiving module, configured to receive a first message from a first relay device, wherein the first message comprises an identifier of a first terminal device, and the identifier of the first terminal device is a layer 2 identifier of the first terminal device, an adaptation layer identifier of the first terminal device, or an identifier allocated by the first relay device to the first terminal device; and
a processing module, configured to communicate with the first terminal device based on the identifier of the first terminal device.

23. The apparatus according to claim 22, wherein the apparatus further comprises:
a sending module, configured to send a second message to the first relay device, wherein the second message comprises an identifier of the second terminal device, and the identifier of the second terminal device is a layer 2 identifier of the second terminal device, an adaptation layer identifier of the second terminal device, or an identifier allocated by the first relay device to the second terminal device.

24. The apparatus according to claim 23, wherein the first message or the second message is any one of the following: a unicast connection establishment request message, a unicast connection establishment accept message, a security mode activation command message, a security mode activation complete message, a PC5-RRC message, or a PC5-S message.

25. The apparatus according to any one of claims 22 to 24, wherein the receiving module is further configured to obtain first data by using a first protocol layer, wherein the first data is data sent by the second terminal device to the first terminal device through the first relay device, and the first data is associated with the identifier of the second terminal device and the identifier of the first terminal device.

26. The apparatus according to claim 25, wherein the processing module is configured to determine second data based on the first data by using the first protocol layer, wherein the second data is data sent by the second terminal device to the first terminal device through the first relay device, and the second data is associated with the identifier of the second terminal device and a second identifier of the first relay device.

27. The apparatus according to claim 25 or 26, wherein the first protocol layer is a packet data convergence protocol PDCP layer or an adaptation layer

28. The apparatus according to any one of claims 22 to 27, wherein the receiving module is further configured to obtain third data by using a second protocol layer, wherein the third data is data received by the second terminal device from the first terminal device through the first relay device, and the third data is associated with a first identifier of the first relay device and the identifier of the second terminal device.

29. The apparatus according to claim 28, wherein the processing module is configured to determine fourth data based on the third data by using the second protocol layer, wherein the fourth data is data received by the second terminal device from the first terminal device through the first relay device, and the fourth data is associated with the identifier of the first terminal device and the identifier of the second terminal device.

30. The apparatus according to claim 27 or 28, wherein the second protocol layer is a radio link control RLC layer or an adaptation layer

31. The apparatus according to any one of claims 22 to 30, wherein the apparatus further comprises:
a sending module, configured to send a first request message to an access network device, wherein the first request message requests first radio bearer configuration information corresponding to the first terminal device, the first request message comprises first QoS information and the identifier of the first terminal device, and the first QoS information is QoS information corresponding to the first terminal device.

32. The apparatus according to claim 31, wherein the receiving module is further configured to receive first configuration information from the access network device, wherein the first configuration information is the first radio bearer configuration information corresponding to the first terminal device, and a first radio bearer is used by the second terminal device to send data to the first terminal device.

33. A communication apparatus, applied to a second terminal device and comprising:
a processing module, configured to determine a second request message, wherein the second request message comprises first QoS information, a second identifier of a first relay device, and first information, the first QoS information is QoS information corresponding to a first terminal device, the second identifier of the first relay device is used by the second terminal device to communicate with the first relay device, there is a correspondence between the first information and the first QoS information, and there is a correspondence between the first information and the second identifier; and
a sending module, configured to send the second request message to an access network device.

34. The apparatus according to claim 33, wherein the first terminal device comprises N third terminal devices, the first QoS information comprises M pieces of second QoS information, and the first information comprises N pieces of second information, wherein N is a positive integer, and M is a positive integer greater than or equal to N; and
the second QoS information is QoS information corresponding to the third terminal device, and there is a correspondence between the second information and the second QoS information.

35. The apparatus according to claim 33 or 34, wherein the apparatus further comprises:
a receiving module, configured to receive a second response message from the access network device, wherein the second response message comprises radio bearer configuration information corresponding to the first terminal device; and
the processing module is further configured to communicate with the first terminal device through the first relay device on a radio bearer corresponding to the first terminal device.

36. The apparatus according to claim 35, wherein the radio bearer configuration information corresponding to the first terminal device comprises X pieces of third radio bearer configuration information, wherein X is a positive integer less than or equal to N; and
the processing module is further configured to communicate with a corresponding third terminal device through the first relay device on a third radio bearer

37. The apparatus according to any one of claims 33 to 36, wherein the first QoS information comprises a first QoS identifier, and the first QoS identifier is not corresponding to the first information; and
the second response message further comprises the first QoS identifier and the first information.

38. The apparatus according to any one of claims 33 to 36, wherein the first QoS information comprises a first QoS identifier, and the first QoS identifier is corresponding to the first information; and
the second response message further comprises the first QoS identifier.

39. The apparatus according to any one of claims 33 to 38, wherein the first information is any one of the following:
a local identifier of an adaptation layer of the first terminal device, a unique identifier of the adaptation layer of the first terminal device, an identifier of a PC5-S layer of the first terminal device, or a layer 2 identifier of the first terminal device.

40. A communication apparatus, comprising:
a processing module, configured to send a first message to a second terminal device through a sending module, wherein the first message comprises an identifier of a first terminal device, the identifier of the first terminal device is a layer 2 identifier of the first terminal device, an adaptation layer identifier of the first terminal device, or an identifier allocated by a first relay device to the first terminal device, and the identifier of the first terminal device is used by the second terminal device to communicate with the first terminal device based on the identifier of the first terminal device, wherein
the processing module is configured to send a second message to the first terminal device through the sending module, wherein the second message comprises an identifier of the second terminal device, the identifier of the second terminal device is a layer 2 identifier of the second terminal device, an adaptation layer identifier of the second terminal device, or an identifier allocated by the first relay device to the second terminal device, and the identifier of the second terminal device is used by the first terminal device to communicate with the second terminal device based on the identifier of the second terminal device.

41. The apparatus according to claim 40, wherein the processing module is configured to send a third message to a second relay device through the sending module, wherein the third message comprises the identifier of the first terminal device, and the second relay device provides a relay service for the second terminal device and the first terminal device; or
the processing module is configured to send a fourth message to a second relay device through the sending module, wherein the fourth message comprises the identifier of the second terminal device, and the second relay device provides a relay service for the second terminal device and the first terminal device.

42. The apparatus according to claim 40 or 41, wherein the first message or the second message is any one of the following:
a unicast connection establishment request message, a unicast connection establishment accept message, a security mode activation command message, a security mode activation complete message, a PC5-RRC message, or a PC5-S message.

43. A communication apparatus, comprising a processor, wherein the processor is coupled to at least one memory, and the processor is configured to read a computer program stored in the at least one memory, to perform the method according to any one of claims 1 to 11 or the method according to any one of claims 12 to 18.

44. A communication apparatus, comprising a processor, wherein the processor is coupled to at least one memory, and the processor is configured to read a computer program stored in the at least one memory, to perform the method according to any one of claims 19 to 21.

45. A computer-readable storage medium, comprising a computer program, wherein when the computer program is run on a computer, the computer is enabled to perform the method according to any one of claims 1 to 11, the computer is enabled to perform the method according to any one of claims 12 to 18, or the computer is enabled to perform the method according to any one of claims 19 to 21.

46. A computer program product, wherein when the computer program product is run on a processor, a communication apparatus is enabled to perform the method according to any one of claims 1 to 11, the communication apparatus is enabled to perform the method according to any one of claims 12 to 18, or the communication apparatus is enabled to perform the method according to any one of claims 19 to 21.

47. A chip, comprising a processor and a communication interface, wherein the processor is configured to read instructions to perform the method according to any one of claims 1 to 11, the method according to any one of claims 12 to 18, or the method according to any one of claims 19 to 21.

48. A communication system, comprising the communication apparatus according to any one of claims 22 to 32 or the communication apparatus according to claim 43, and comprising the communication apparatus according to any one of claims 33 to 42 or the communication apparatus according to claim 44.
